# EUROPEAN PATENT APPLICATION

(11) **EP 3 747 684 A1**
(43) Date of publication of application: **09.12.2020**
(21) Application number: 20177370.2
(22) Date of filing: 29.05.2020
(51) Int. Cl.: B60L 3/12, F02N 11/04, F02N 11/08, B60L 3/00, B60L 50/15

(54) **VEHICLE SYSTEM WITH START MECHANISM AND METHOD OF OPERATION THEREOF**

(30) Priority: 07.06.2019 US 201916435107
(71) Applicant: MOJ.IO Inc., Vancouver, British Columbia V6C 2X4 (CA)
(72) Inventor: Curtis, James Anthony, Vancouver, British Columbia V6C 2X4 (CA)
(74) Representative: Appleyard Lees IP LLP

(57) **Abstract**

A method of operation of a vehicle system includes: receiving a first voltage reading; receiving a second voltage reading; calculating a first voltage difference between the first voltage reading and the second voltage reading; determining a start event for an electrical engine with the first voltage difference is within an electrical range; and operating the electric vehicle based on the start event.

## Description

### TECHNICAL FIELD

An embodiment of the present invention relates generally to a vehicle system, and more particularly to a system with a start mechanism for an electric engine.

### BACKGROUND ART

Modern transportation systems, especially vehicle systems such as electric vehicles or cars or hybrid vehicles or cars with an electric engine as a portion of the entire engine, are providing increasing levels of functionality to support modern life including additional status monitoring, connectivity services, and location-based information services. Research and development in the existing technologies can take a myriad of different directions.

As users become more empowered with the growth of hybrid vehicles or all electric vehicles, new and old paradigms begin to take advantage of this new space. One such space is increased diagnostic information for these vehicles. However, in the midst of increased diagnostic information, other challenges arise with hybrid vehicles or all electric vehicles that were not present in vehicles with all combustion engines.

Thus, a need still remains for a vehicle system with a start mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### SUMMARY

An embodiment of the present invention provides a method of operation of a vehicle system including: receiving a first voltage reading; receiving a second voltage reading; calculating a first voltage difference between the first voltage reading and the second voltage reading; determining a start event for an electrical engine with the first voltage difference is within an electrical range; and operating the electric vehicle based on the start event.

An embodiment of the present invention provides a vehicle system, including: a communication unit configured to: receive a first voltage reading, receive a second voltage reading; a control unit, coupled to the communication unit, configured to: calculate a first voltage difference between the first voltage reading and the second voltage reading, determine a start event for an electrical engine with the first voltage difference is within an electrical range, and operate the electrical vehicle based on the start event.

An embodiment of the present invention provides a non-transitory computer readable medium including instructions for a vehicle system, including: receiving a first voltage reading; receiving a second voltage reading; calculating a first voltage difference between the first voltage reading and the second voltage reading; determining a start event for an electrical engine with the first voltage difference is within an electrical range; and operating the electric vehicle based on the start event.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a vehicle system with a start mechanism in an embodiment of the present invention.
FIG. 2 is an example a top plan view illustration of various vehicles for the vehicle system.
FIG. 3 is an exemplary block diagram of the vehicle system.
FIG. 4 is a voltage graphical view of an example of the electric vehicle.
FIG. 5 is a voltage graphical view of a further example of the electric vehicle.
FIG. 6 is a voltage graphical view of an example of the combustion vehicle.
FIG. 7 is a ripple voltage graphical view of an example of the combustion vehicle.
FIG. 8 is a ripple voltage graphical view of an example of the electric vehicle.
FIG. 9 is a control flow of the vehicle system.
FIG. 10 is a flow chart of a method of operation of a vehicle system in an embodiment of the present invention.

### DETAILED DESCRIPTION

Embodiments provide the vehicle system, the electric vehicle, or a combination thereof can minimize the complexity to detect the start event by eliminating the need for processing the information for the revolutions per minute (RPM). The correct detection of the dip voltage reading and the first voltage difference falling within the electrical range provides for the determination of the start event for the ignition for the electric engine or for the electric portion of the hybrid engine.

Embodiments provide the vehicle system, the electric vehicle, or a combination thereof can avoid a missed detection of the start event by avoiding relying on the information for the revolution per minute, which is not provided or exists for the electric engine or the electric portion of the hybrid engine.

Embodiments provide the vehicle system, the electric vehicle, or a combination thereof can improve the reliability of the start event not only by confirming beyond the dip voltage reading falling in the electrical range but also the ripples fall in the electrical range.

Embodiments provide that the vehicle system, the electric vehicle, or a combination thereof can avoid a missed detection of the start event for the hybrid engine when combustion portion is operating by determining the ripples fall in the non-electrical range despite the dip voltage reading falling in the electrical range.

Embodiments provide the simplified and robust determination of the voltage value for of the dip voltage reading and detection of the start event allows for the vehicle system, the electric vehicle, or a combination thereof to function correct. As an example, navigation systems can correctly compute mileage range for the electric vehicle or hybrid vehicle. Also as an example, the electric vehicle can prepare the rest of the system within and external thereto for operation.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention. The terms first, second, etc. can be used throughout as part of element names and are used as a matter of descriptive convenience and are not intended to have any other significance or provide limitations for an embodiment.

The term "module" referred to herein can include or be implemented as software, hardware, or a combination thereof in the present invention in accordance with the context in which the term is used. For example, the software can be machine code, firmware, embedded code, and application software. The software can also include a function, a call to a function, a code block, or a combination thereof. Also for example, the hardware can be gates, circuitry, processor, computer, integrated circuit, integrated circuit cores, a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a module is written in the apparatus claims section below, the modules are deemed to include hardware circuitry for the purposes and the scope of apparatus claims.

The modules in the following description of the embodiments can be coupled to one other as described or as shown. The coupling can be direct or indirect without or with, respectively, intervening items between coupled items. The coupling can be physical contact or by communication between items.

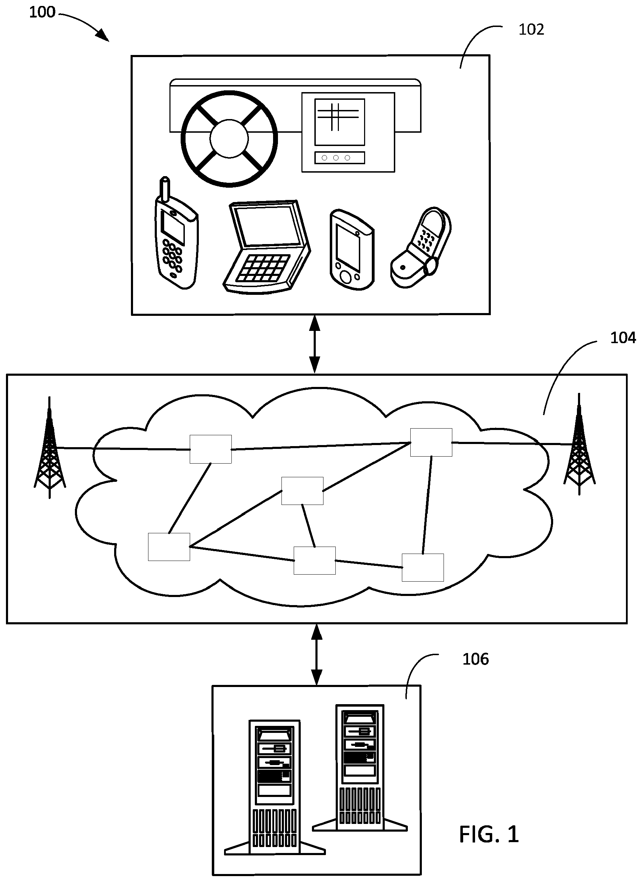

Referring now to FIG. 1, therein is shown a vehicle system 100 with a start mechanism in an embodiment of the present invention. The vehicle system 100 includes a first device 102, such as a client or a server, connected to a second device 106, such as a client or server. The first device 102 can communicate with the second device 106 with a communication path 104, such as a wireless or wired network.

For example, the first device 102 can be of any of a variety of devices, such as a vehicle, a telematics system in a vehicle, a computing device, a cellular phone, a tablet computer, a smart phone, a notebook computer, vehicle embedded navigation system, or computing device. The first device 102 can couple, either directly or indirectly, to the communication path 104 to communicate with the second device 106 or can be a stand-alone device.

The second device 106 can be any of a variety of centralized or decentralized computing devices, sensor devices to take measurements or record environmental information, such as sensor instruments, sensor equipment, or a sensor array. For example, the second device 106 can be a multimedia computer, a laptop computer, a desktop computer, grid-computing resources, a virtualized computer resource, cloud computing resource, routers, switches, peer-to-peer distributed computing devices, or a combination thereof.

The second device 106 can be mounted externally or internally to a vehicle, centralized in a single room or within a vehicle, distributed across different rooms, distributed across different geographical locations, embedded within a telecommunications network. The second device 106 can couple with the communication path 104 to communicate with the first device 102.

For illustrative purposes, the vehicle system 100 is described with the second device 106 as a computing device, although it is understood that the second device 106 can be different types of devices, such as a standalone sensor or measurement device. Also for illustrative purposes, the vehicle system 100 is shown with the second device 106 and the first device 102 as end points of the communication path 104, although it is understood that the vehicle system 100 can have a different partition between the first device 102, the second device 106, and the communication path 104. For example, the first device 102, the second device 106, or a combination thereof can also function as part of the communication path 104.

The communication path 104 can span and represent a variety of networks and network topologies. For example, the communication path 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

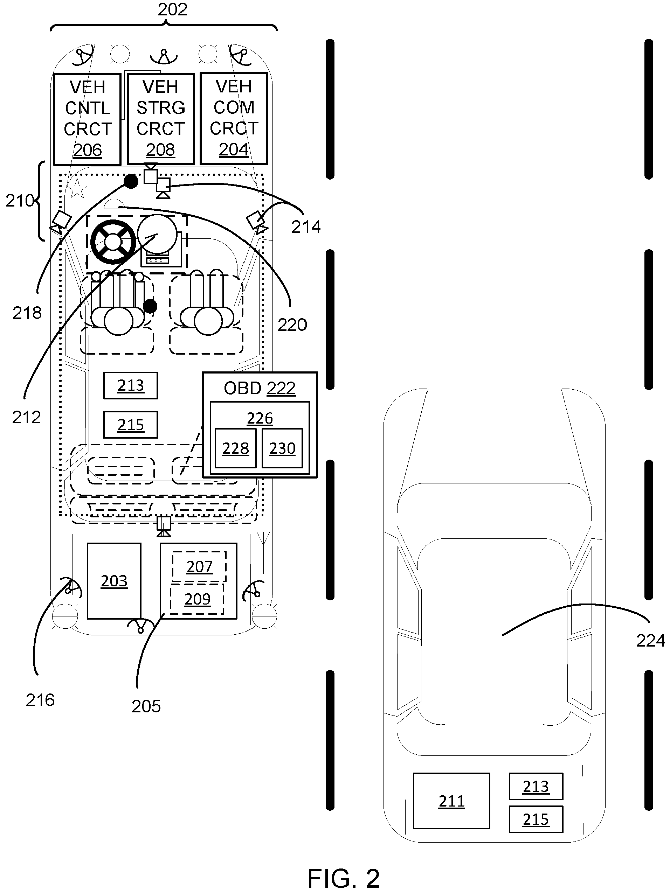

Referring now to FIG. 2, therein is shown an example a top plan view illustration of various vehicles for the vehicle system 100 of FIG. 1. As an example, the vehicle system 100 can include or interact with the first device 102 of FIG. 1 as an electric vehicle 202, a combustion vehicle 224, or a combination thereof. The electric vehicle 202, the combustion vehicle 224, or a combination thereof can also include one or more of environmental sensors 210.

The electric vehicle 202 is an object or a machine used for transporting people or goods. The electric vehicle 202 can also be capable of providing assistance in maneuvering or operating the object or the machine. The electric vehicle 202.

For example, the electric vehicle 202 can different types of vehicles. As a specific example, the electric vehicle 202 can be an automobile with only an electric engine 203. As a further specific example, the electric vehicle 202 can be a hybrid automobile that can have a hybrid engine 205 (as shown by dotted box in FIG. 2) including a combustion portion 207 (as shown by dotted box in FIG. 2) and an electric portion 209. For further example, the electric vehicle 202 can include a car, a truck, a cart, or a combination thereof.

The combustion vehicle 224 is an object or a machine used for transporting people or goods. The combustion vehicle 224 can also be capable of providing assistance in maneuvering or operating the object or the machine. The combustion vehicle 224 runs with the engine that is not an electric engine 203 or not include an electric portion 209 of the hybrid engine 205. The combustion vehicle 224 only has a combustion engine 211 that operates based on non-electrical fuel, such as petroleum, ethanol, hydrogen, diesel, or a combination thereof. For example, the combustion vehicle 224 can include a car, a truck, a cart, or a combination thereof.

The electric vehicle 202 can include a device, a circuit, one or more specific sensors, or a combination thereof for providing assistance or additional information to control, maneuver, or operate the electric vehicle 202. The electric vehicle 202 can include a vehicle communication circuit 204, a vehicle control circuit 206, a vehicle storage circuit 208, other interfaces, or a combination thereof.

For brevity and simplicity, the combustion vehicle 224 can also include the vehicle communication circuit 204, the vehicle control circuit 206, the vehicle storage circuit 208, other interfaces, or the combination thereof but are numbered and named the same as the the circuits in the electric vehicle 202. The functions can be similar but not necessarily the same between the circuits within the electric vehicle 202 and the combustion vehicle 224.

The electric vehicle 202 can also include on-board diagnostics 222 (OBD) that can be accessed by the vehicle control circuit 206. As an example, the vehicle control circuit 206 can access the on-board diagnostics 222 with the vehicle communication circuit 204. The electric vehicle 202 can store and retrieve the on-board diagnostics 222 to and from the vehicle storage circuit 208.

The on-board diagnostics 222 represent information about the electric vehicle 202, the combustion vehicle 224, or a combination thereof. For example, the on-board diagnostics 222 can provide status or the state of the electric vehicle 202, the combustion vehicle 224, or a portion thereof.

As a specific example, the on-board diagnostics 222 can represent information about a portion of the electric engine 203 or the hybrid engine 205, such as the electric portion 209 or the combustion portion 207, or items that operates with the electric engine 203 or the hybrid engine 205 for either the electric portion 209 or the combustion portion 207. Continuing with the example, the on-board diagnostics 222 can provide information about a battery 213 or an alternator 215 operating in association with the battery 213.

Although the battery 213 can differ in size, capacity, and type, depending on the engine being the electric engine 203, the hybrid engine 205, the combustion engine 211, the battery 213 provides voltage values that can be read as part of the on-board diagnostics 222. Further, the alternator 215 similar to the battery 213 for the various types of engines, functions to replenish or recharge the battery 213. As the alternator 215 charges the battery 213, the voltage of the battery 213 can also be read as part of the on-board diagnostics 222.

Also as a specific example, the on-board diagnostics 222 can represent an engine status of the electric engine 203, the electric portion 209 of the hybrid engine 205, or a combination thereof. An example of the engine status can include the ignition factors 226.

The ignition factors 226 represent various information about or the state of the electric engine 203 or the electric portion 209 of the hybrid engine 205. The ignition factors 226 can also represent various information about or the state of the combustion engine 211 or the combustion portion 207 of the hybrid engine 205. For example, the ignition factors 226 can include an ignition status 228 and an ignition message 230.

The ignition status 228 represents the current state of the ignition. The ignition status 228 can represent whether the electric engine 203, the hybrid engine 205, or the combustion engine 211 is on or off. The term "on" refers to the electric engine 203, the hybrid engine 205, or the combustion engine 211 is running. The term "off' refers to the electric engine 203, the hybrid engine 205, or the combustion engine 211 is not running. The ignition message 230 provides the information about the ignition including, as an example, the ignition status 228.

The vehicle storage circuit 208 can include a functional unit or circuit integral to the electric vehicle 202, the combustion vehicle 224, or a combination thereof and configured to store and recall information. The vehicle storage circuit 208 can be a volatile memory, a nonvolatile memory, an internal memory, an external memory, or a combination thereof. For example, the vehicle storage circuit 208 can be a nonvolatile storage such as non-volatile random access memory (NVRAM), Flash memory, disk storage, or a volatile storage such as static random access memory (SRAM).

The vehicle storage circuit 208 can store vehicle software, other relevant data, such as input information, information from sensors, processing results, information predetermined or preloaded by the vehicle system 100 or vehicle manufacturer, or a combination thereof. The vehicle storage circuit 208 can store the information for the on-board diagnostics 222.

The vehicle control circuit 206 can include a function unit or circuit integral to t the electric vehicle 202, the combustion vehicle 224, or a combination thereof and configured to execute or implement instructions. The vehicle control circuit 206 can execute or implement the vehicle software to provide the intelligence of the electric vehicle 202, the combustion vehicle 224, the vehicle system 100, or a combination thereof. The vehicle control circuit 206 can respond to requests for the on-board diagnostics 222. The request can be from other parts of the electric vehicle 202, the combustion vehicle 224, the vehicle system 100, or a combination thereof or external to the vehicle system 100.

The vehicle control circuit 206 can be implemented in a number of different manners. For example, the vehicle control circuit 206 can be a processor, an application specific integrated circuit (ASIC) an embedded processor, a microprocessor, a hardware control logic, a hardware finite state machine (FSM), a digital signal processor (DSP), or a combination thereof. As a more specific example, the vehicle control circuit 206 can include an engine control unit, one or more central processing unit, or a combination thereof

The vehicle communication circuit 204 can include a function unit or circuit integral to the electric vehicle 202, the combustion vehicle 224, or a combination thereof and configured to enable external communication to and from the electric vehicle 202 or the combustion vehicle 224. For example, the vehicle communication circuit 204 can permit the electric vehicle 202, the combustion vehicle 224, or a combination thereof to communicate with the first device 102 of FIG. 1, the second device 106 of FIG. 1, the communication path 104 of FIG. 1, or a combination thereof. The vehicle communication circuit 204 can provide the on-board diagnostics 222 to other portions of the electric vehicle 202, the combustion vehicle 224, the vehicle system 100, or a combination thereof or external to the vehicle system 100.

The vehicle communication circuit 204 can also function as a communication hub allowing the electric vehicle 202, the combustion vehicle 224, or a combination thereof to function as part of the communication path 104 and not limited to be an end point or terminal circuit to the communication path 104. The vehicle communication circuit 204 can include active and passive components, such as microelectronics or an antenna, for interaction with the communication path 104. For example, the vehicle communication circuit 204 can include a modem, a transmitter, a receiver, a port, a connector, or a combination thereof for wired communication, wireless communication, or a combination thereof.

The vehicle communication circuit 204 can couple with the communication path 104 to send or receive information directly between the vehicle communication circuit 204 and the first device 102, the second device 106, tor a combination thereof as end points of the communication, such as for direct line-of-sight communication or peer-to-peer communication. The vehicle communication circuit 204 can further couple with the communication path 104 to send or receive information through a server or another intermediate device in between end points of the communication.

The electric vehicle 202, the combustion vehicle 224, or a combination thereof can further include various interfaces. The electric vehicle 202 or the combustion vehicle 224 can include one or more interfaces for interaction or internal communication between functional units or circuits of the electric vehicle 202 or the combustion vehicle 224, respectively. For example, the electric vehicle 202, the combustion vehicle 224, or a combination thereof can include one or more interfaces, such as drivers, firmware, wire connections or buses, protocols, or a combination thereof, for the vehicle storage circuit 208, the vehicle control circuit 206, or a combination thereof.

The electric vehicle 202 or the combustion vehicle 224 can further include one or more interfaces for interaction with an occupant, an operator or a driver, a passenger, or a combination thereof relative to the electric vehicle 202 or the combustion vehicle 224, respectively. For example, the electric vehicle 202, the combustion vehicle 224, or a combination thereof can include a user interface including input or output devices or circuits, such as a screen or touch screen, a speaker, a microphone, a keyboard or other input devices, an instrument panel, or a combination thereof.

The electric vehicle 202 or the combustion vehicle 224 can further include one or more interfaces along with switches or actuators for physically controlling movable components of the electric vehicle 202 or the combustion vehicle 224, respectively. For example, the electric vehicle 202 or the combustion vehicle 224 can include the one or more interfaces along with the controlling mechanisms to physically perform and control the maneuvering of the electric vehicle 202 or the combustion vehicle 224, respectively, such as for automatic driving or maneuvering features.

The functional units or circuits in the electric vehicle 202 or the combustion vehicle 224 can work individually and independently of the other functional units or circuits. The electric vehicle 202 or the combustion vehicle 224 can work individually and independently from the first device 102, the communication path 104, the second device 106, other devices or vehicles, or a combination thereof.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

The environmental sensors 210 are each a device for detecting or identifying environment of the electric vehicle 202 or the combustion vehicle 224. The environmental sensors 210 can detect, identify, determine, or a combination thereof for the electric vehicle 202 or the combustion vehicle 224 itself, such as for status or movement thereof. The environmental sensors 210 can detect, identify, determine, or a combination thereof for environment within a cabin of the electric vehicle 202 or the combustion vehicle 224, an environment external to and surrounding the electric vehicle 202 or the combustion vehicle 224, or a combination thereof.

For example, the environmental sensors 210 can include a location-movement sensor 212, a visual sensor 214, a radar sensor 216, an accessory sensor 218, a volume sensor 220, or a combination thereof. The location-movement sensor 212 can identify or calculate a geographic location of the electric vehicle 202 or the combustion vehicle 224, determine a movement of the electric vehicle 202 or the combustion vehicle 224, or a combination thereof. Examples of the location-movement sensor 212 can include an accelerometer, a speedometer, a GPS receiver or device, a gyroscope or a compass, or a combination thereof. The electric vehicle 202 or the combustion vehicle 224 can include the environmental sensors 210 other than or in addition to the location-movement sensor 212, such as thermal sensor. The thermal sensor can capture and provide temperature readings for portions of the electric vehicle 202 or the combustion vehicle 224. The thermal sensor can also capture and provide temperature readings external to the electric vehicle 202 or the combustion vehicle 224.

The visual sensor 214 can include a sensor for detecting or determining visual information representing the environment external to and surrounding the electric vehicle 202 or the combustion vehicle 224. The visual sensor 214 can include a camera attached to or integral with the electric vehicle 202 or the combustion vehicle 224. For example, the visual sensor 214 can include a camera, such as forward facing camera, a rear-view or back-up camera, a side-view or a blind-spot camera, or a combination thereof. Also for example, the visual sensor 214 can include an infrared sensor or a night vision sensor.

The visual sensor 214 can further include a camera on the first device 102 connected to and interacting with the electric vehicle 202 or the combustion vehicle 224. The visual sensor 214 can further include a cabin camera for detecting or determining visual information inside the vehicle or cabin of the vehicle.

The radar sensor 216 can include an object-detection system, device, or circuit. The radar sensor 216 can determine or identify an existence of an object or a target, such as an obstacle or another vehicle, external to the electric vehicle 202 or the combustion vehicle 224, a relative location or a distance between the object or the target and the electric vehicle 202 or the combustion vehicle 224, or a combination thereof.

The radar sensor 216 can utilize radio waves to determine or identify an existence of the object or the target, the relative location or a distance from the electric vehicle 202 or the combustion vehicle 224, or a combination thereof. For example, the radar sensor 216 can include a proximity sensor or warning system, such as for an area in front of, behind, adjacent to or on a side of, or a combination thereof geographically or physically relative to the electric vehicle 202 or the combustion vehicle 224.

The accessory sensor 218 can include a sensor for determining or detecting a status of a subsystem or a feature of the electric vehicle 202 or the combustion vehicle 224. The accessory sensor 218 can determine or detect the status or a setting for windshield wipers, turn signals, gear setting, headlights, or a combination thereof.

The volume sensor 220 can include a sensor for detecting or determining sounds for the electric vehicle 202 or the combustion vehicle 224. The volume sensor 220 can include a microphone for detecting or determining sounds within a cabin of the electric vehicle 202 or the combustion vehicle 224. The volume sensor 220 can further include a circuit for detecting or determining a volume level or an output level of speakers within the electric vehicle 202 or the combustion vehicle 224.

The electric vehicle 202 or the combustion vehicle 224 can use one or more of the environmental sensors 210 to generate the on-board diagnostics 222 describing or representing information regarding the environment within or surrounding the electric vehicle 202 or the combustion vehicle 224. The on-board diagnostics 222 can be further processed with the vehicle control circuit 206, stored in the vehicle storage circuit 208, communicated to another device through the vehicle control circuit 206, or a combination thereof.

The electric vehicle 202 or the combustion vehicle 224 can further include a user device or a mobile device illustrated in FIG. 1. For example, the electric vehicle 202 or the combustion vehicle 224 can include the first device 102.

As a more specific example, the vehicle communication circuit 204, the vehicle control circuit 206, the vehicle storage circuit 208, the environmental sensors 210, one or more interfaces, or a combination thereof can be included in or make up the first device 102 included in or integral with the electric vehicle 202 or the combustion vehicle 224. Also as a more specific example, the electric vehicle 202 or the combustion vehicle 224 can include or be integral with the first device 102 including an embedded vehicle system, an infotainment system, a smart driving or a driver assistance system, a self-driving or a maneuvering system for the vehicle, or a combination thereof.

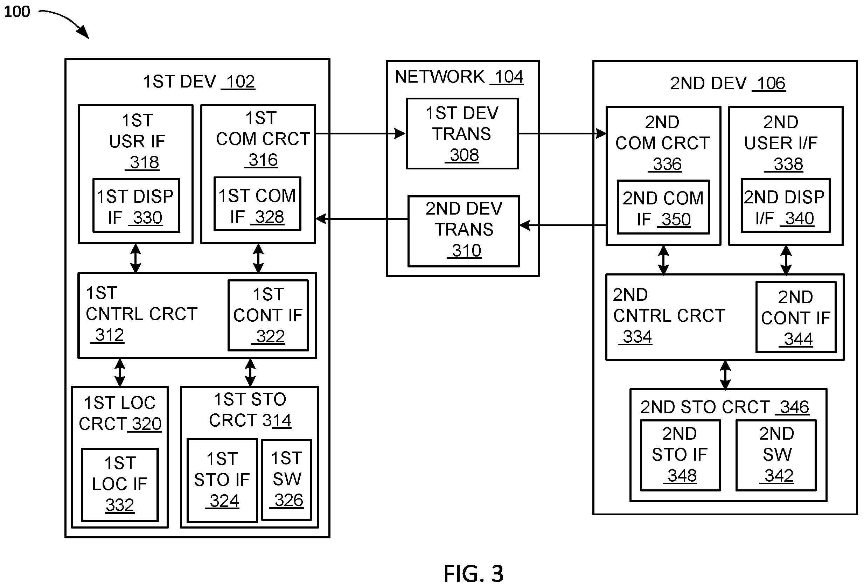

Referring now to FIG. 3, therein is shown an exemplary block diagram of the vehicle system 100. The vehicle system 100 can include the first device 102, the communication path 104, and the second device 106 o. The first device 102 can send information in a first device transmission 308 over the communication path 104 to the second device 106. The second device 106 can send information in a second device transmission 310 of FIG. 3 over the communication path 104 to the first device 102.

For illustrative purposes, the vehicle system 100 is shown with the first device 102 as a client device, although it is understood that the vehicle system 100 can include the first device 102 as a different type of device. For example, the first device 102 can be a server including a display interface.

Also for illustrative purposes, the vehicle system 100 is shown with the second device 106 as a server, although it is understood that the vehicle system 100 can include the second device 106 as a different type of device. For example, the second device 106 can be a client device.

Further, for illustrative purposes, the vehicle system 100 is shown with interaction between the first device 102 and the second device 106, although it is understood that the first device 102 can similarly interact another instance of the first device 102. Similarly, the second device 106 can similarly interact with another instance of the second device 106.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 312, a first storage circuit 314, a first communication circuit 316, and a first user interface 318, and a first location circuit 320. The first control circuit 312 can include a first control interface 322. The first control circuit 312 can execute a first software 326 o to provide the intelligence of the vehicle system 100.

The first control circuit 312 can be implemented in a number of different manners. For example, the first control circuit 312 can be a processor, an application specific integrated circuit (ASIC) an embedded processor, a microprocessor, a hardware control logic, a hardware finite state machine (FSM), a digital signal processor (DSP), or a combination thereof. The first control interface 322 can be used for communication between the first control circuit 312 and other functional units or circuits in the first device 102. The first control interface 322 can also be used for communication that is external to the first device 102.

The first control interface 322 can receive information from the other functional units/circuits or from external sources, or can transmit information to the other functional units/circuits or to external destinations. The external sources and the external destinations refer to sources and destinations external to the first device 102.

The first control interface 322 can be implemented in different ways and can include different implementations depending on which functional units/circuits or external units/circuits are being interfaced with the first control interface 322. For example, the first control interface 322 can be implemented with a pressure sensor, an inertial sensor, a microelectromechanical system (MEMS), optical circuitry, waveguides, wireless circuitry, wireline circuitry, or a combination thereof.

The first storage circuit 314 can store the first software 326. The first storage circuit 314 can also store the relevant information, such as data representing incoming images, data representing previously presented image, sound files, or a combination thereof.

The first storage circuit 314 can be a volatile memory, a nonvolatile memory, an internal memory, an external memory, or a combination thereof. For example, the first storage circuit 314 can be a nonvolatile storage such as non-volatile random access memory (NVRAM), Flash memory, disk storage, or a volatile storage such as static random access memory (SRAM).

The first storage circuit 314 can include a first storage interface 324. The first storage interface 324 can be used for communication between the first storage circuit 314 and other functional units or circuits in the first device 102. The first storage interface 324 can also be used for communication that is external to the first device 102.

The first storage interface 324 can receive information from the other functional units/circuits or from external sources, or can transmit information to the other functional units/circuits or to external destinations. The external sources and the external destinations refer to sources and destinations external to the first device 102.

The first storage interface 324 can include different implementations depending on which functional units/circuits or external units/circuits are being interfaced with the first storage circuit 314. The first storage interface 324 can be implemented with technologies and techniques similar to the implementation of the first control interface 322.

The first communication circuit 316 can enable external communication to and from the first device 102. For example, the first communication circuit 316 can permit the first device 102 to communicate with the second device 106 of FIG. 1, an attachment, such as a peripheral device or a desktop computer, and the communication path 104.

The first communication circuit 316 can also function as a communication hub allowing the first device 102 to function as part of the communication path 104 and not limited to be an end point or terminal circuit to the communication path 104. The first communication circuit 316 can include active and passive components, such as microelectronics or an antenna, for interaction with the communication path 104.

The first communication circuit 316 can include a first communication interface 328. The first communication interface 328 can be used for communication between the first communication circuit 316 and other functional units or circuits in the first device 102. The first communication interface 328 can receive information from the other functional units/circuits or can transmit information to the other functional units or circuits.

The first communication interface 328 can include different implementations depending on which functional units or circuits are being interfaced with the first communication circuit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a first display interface 330. The first display interface 330 can include an output device. The first display interface 330 can include a display, a projector, a video screen, a speaker, or any combination thereof.

The first control circuit 312 can operate the first user interface 318 to display information generated by the vehicle system 100. The first control circuit 312 can also execute the first software 326 for the other functions of the vehicle system 100, including receiving location information from the first location circuit 320. The first control circuit 312 can further execute the first software 326 for interaction with the communication path 104 via the first communication circuit 316.

The first location circuit 320 can generate location information, current heading, current acceleration, and current speed of the first device 102, as examples. The first location circuit 320 can be implemented in many ways. For example, the first location circuit 320 can function as at least a part of the global positioning system, an inertial vehicle system, a cellular-tower location system, a pressure location system, or any combination thereof. Also, for example, the first location circuit 320 can utilize components such as an accelerometer or global positioning system (GPS) receiver.

The first location circuit 320 can include a first location interface 332. The first location interface 332 can be used for communication between the first location circuit 320 and other functional units or circuits in the first device 102. The first location interface 332 can also be used for communication external to the first device 102.

The first location interface 332 can receive information from the other functional units/circuits or from external sources, or can transmit information to the other functional units/circuits or to external destinations. The external sources and the external destinations refer to sources and destinations external to the first device 102.

The first location interface 332 can include different implementations depending on which functional units/circuits or external units/circuits are being interfaced with the first location circuit 320. The first location interface 332 can be implemented with technologies and techniques similar to the implementation of the first control circuit 312.

The second device 106 can be optimized for implementing an embodiment of the present invention in a multiple device embodiment with the first device 102. The second device 106 can provide the additional or higher performance processing power compared to the first device 102. The second device 106 can include a second control circuit 334, a second communication circuit 336, a second user interface 338, and a second storage circuit 346.

The second user interface 338 allows a user (not shown) to interface and interact with the second device 106. The second user interface 338 can include an input device and an output device. Examples of the input device of the second user interface 338 can include a keypad, a touchpad, soft-keys, a keyboard, a microphone, or any combination thereof to provide data and communication inputs. Examples of the output device of the second user interface 338 can include a second display interface 340 of FIG. 3. The second display interface 340 can include a display, a projector, a video screen, a speaker, or any combination thereof.

The second control circuit 334 can execute a second software 342 of FIG. 3 to provide the intelligence of the second device 106 of the vehicle system 100. The second software 342 can operate in conjunction with the first software 326. The second control circuit 334 can provide additional performance compared to the first control circuit 312.

The second control circuit 334 can operate the second user interface 338 to display information. The second control circuit 334 can also execute the second software 342 for the other functions of the vehicle system 100, including operating the second communication circuit 336 to communicate with the first device 102 over the communication path 104.

The second control circuit 334 can be implemented in a number of different manners. For example, the second control circuit 334 can be a processor, an embedded processor, a microprocessor, hardware control logic, a hardware finite state machine (FSM), a digital signal processor (DSP), or a combination thereof.

The second control circuit 334 can include a second control interface 344 of FIG. 3. The second control interface 344 can be used for communication between the second control circuit 334 and other functional units or circuits in the second device 106. The second control interface 344 can also be used for communication that is external to the second device 106.

The second control interface 344 can receive information from the other functional units/circuits or from external sources, or can transmit information to the other functional units/circuits or to external destinations. The external sources and the external destinations refer to sources and destinations external to the second device 106.

The second control interface 344 can be implemented in different ways and can include different implementations depending on which functional units/circuits or external units/circuits are being interfaced with the second control interface 344. For example, the second control interface 344 can be implemented with a pressure sensor, an inertial sensor, a microelectromechanical system (MEMS), optical circuitry, waveguides, wireless circuitry, wireline circuitry, or a combination thereof.

A second storage circuit 346 can store the second software 342. The second storage circuit 346 can also store the information such as data representing incoming images, data representing previously presented image, sound files, or a combination thereof.. The second storage circuit 346 can be sized to provide the additional storage capacity to supplement the first storage circuit 314.

For illustrative purposes, the second storage circuit 346 is shown as a single element, although it is understood that the second storage circuit 346 can be a distribution of storage elements. Also for illustrative purposes, the vehicle system 100 is shown with the second storage circuit 346 as a single hierarchy storage system, although it is understood that the vehicle system 100 can include the second storage circuit 346 in a different configuration. For example, the second storage circuit 346 can be formed with different storage technologies forming a memory hierarchal system including different levels of caching, main memory, rotating media, or off-line storage.

The second storage circuit 346 can be a volatile memory, a nonvolatile memory, an internal memory, an external memory, or a combination thereof. For example, the second storage circuit 346 can be a nonvolatile storage such as non-volatile random access memory (NVRAM), Flash memory, disk storage, or a volatile storage such as static random access memory (SRAM).

The second storage circuit 346 can include a second storage interface 348. The second storage interface 348 can be used for communication between the second storage circuit 346 and other functional units or circuits in the second device 106. The second storage interface 348 can also be used for communication that is external to the second device 106.

The second storage interface 348 can receive information from the other functional units/circuits or from external sources, or can transmit information to the other functional units/circuits or to external destinations. The external sources and the external destinations refer to sources and destinations external to the second device 106.

The second storage interface 348 can include different implementations depending on which functional units/circuits or external units/circuits are being interfaced with the second storage circuit 346. The second storage interface 348 can be implemented with technologies and techniques similar to the implementation of the second control interface 344.

The second communication circuit 336 can enable external communication to and from the second device 106. For example, the second communication circuit 336 can permit the second device 106 to communicate with the first device 102 over the communication path 104.

The second communication circuit 336 can also function as a communication hub allowing the second device 106 to function as part of the communication path 104 and not limited to be an end point or terminal unit or circuit to the communication path 104. The second communication circuit 336 can include active and passive components, such as microelectronics or an antenna, for interaction with the communication path 104.

The second communication circuit 336 can include a second communication interface 350. The second communication interface 350 can be used for communication between the second communication circuit 336 and other functional units or circuits in the second device 106. The second communication interface 350 can receive information from the other functional units/circuits or can transmit information to the other functional units or circuits.

The second communication interface 350 can include different implementations depending on which functional units or circuits are being interfaced with the second communication circuit 336. The second communication interface 350 can be implemented with technologies and techniques similar to the implementation of the second control interface 344.

The first communication circuit 316 can couple with the communication path 104 to send information to the second device 106 in the first device transmission 308. The second device 106 can receive information in the second communication circuit 336 from the first device transmission 308 of the communication path 104.

The second communication circuit 336 can couple with the communication path 104 to send information to the first device 102 in the second device transmission 310. The first device 102 can receive information in the first communication circuit 316 from the second device transmission 310 of the communication path 104. The vehicle system 100 can be executed by the first control circuit 312, the second control circuit 334, or a combination thereof. For illustrative purposes, the second device 106 is shown with the partition containing the second user interface 338, the second storage circuit 346, the second control circuit 334, and the second communication circuit 336, although it is understood that the second device 106 can include a different partition. For example, the second software 342 can be partitioned differently such that some or all of its function can be in the second control circuit 334 and the second communication circuit 336. Also, the second device 106 can include other functional units or circuits not shown in FIG. 3 for clarity.

The functional units or circuits in the first device 102 can work individually and independently of the other functional units or circuits. The first device 102 can work individually and independently from the second device 106 and the communication path 104.

The functional units or circuits in the second device 106 can work individually and independently of the other functional units or circuits. The second device 106 can work individually and independently from the first device 102 and the communication path 104.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the vehicle system 100 is described by operation of the first device 102 and the second device 106. It is understood that the first device 102 and the second device 106 can operate any of the modules and functions of the vehicle system 100.

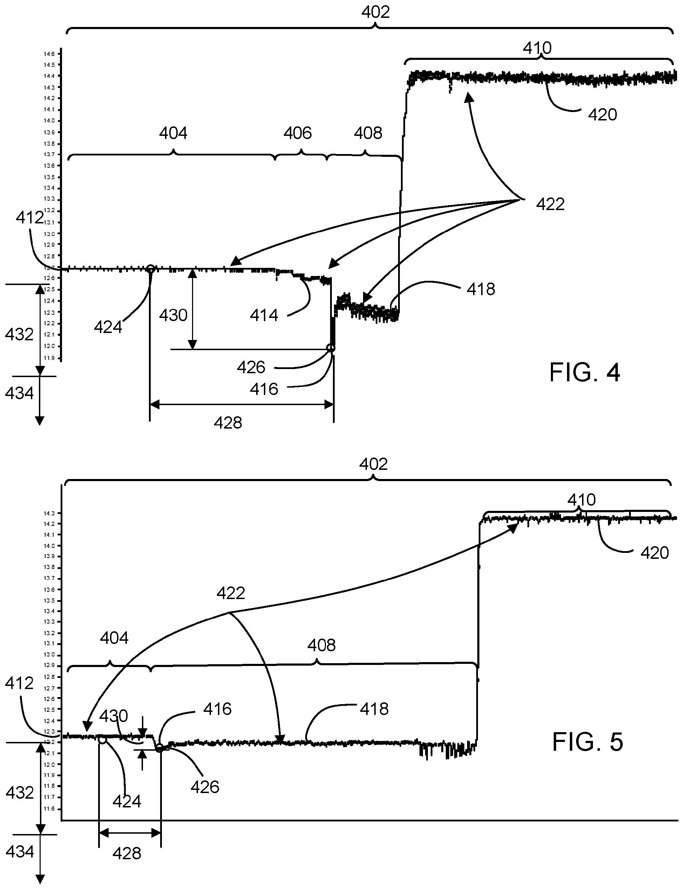

Referring now to FIG. 4, therein is shown a voltage graphical view of an example of the electric vehicle 202. The voltage graphical view depicts an example of voltage levels or values or readings for the battery 213 of FIG. 2 of the electric vehicle 202 as hybrid vehicle.

The voltage graphical view depicts the voltage levels or values or readings when the electric portion 209 of FIG. 2 of the hybrid engine 205 of FIG. 2 before being started through running. The voltage graphical view in FIG. 4 does not depict the voltage levels or values or readings for the combustion portion 207 of the hybrid engine 205. The description for this voltage graphical view can also be applicable when the electric vehicle 202 is an electric vehicle and with the electric engine 203 of FIG. 2.

The voltage graphical view depicts a voltage profile 402 relative to a y-axis and an x-axis. The y-axis represents the voltage values or voltage readings for the battery 213. The values noted on the y-axis are shown as examples and embodiments are not limited to the values shown along the y-axis. The x-axis represents time although the x-axis is not shown in FIG. 4.

The voltage profile 402 represents voltage readings for the battery 213 for various activities of the electric vehicle 202. The voltage profile 402 can be obtained as part of the on-board diagnostics 222 of FIG. 2. In this example, the voltage profile 402 is shown to include a resting region 404, an initiation region 406, a turn-on region 408, and a running region 410.

The resting region 404 is before an ignition is engaged or an ignition activity. The resting region 404 has the resting voltage reading 412. The resting voltage reading 412 is the voltage value for the battery 213 before ignition is engaged or an ignition activity. In this example, the resting voltage reading 412 is shown to be around 12.7 volts.

The initiation region 406 is when the ignition is initially engaged. This example shows the voltage profile 402 with the initiation region 406 following the resting region 404. As in this example, during the initiation region 406, the voltage profile 402 drops from the voltage level from the resting voltage reading 412 to a voltage level at a pre-dip voltage reading 414.

The pre-dip voltage reading 414 is the voltage value for the battery 213 following an initial engagement of the ignition. Continuing with this example, the voltage level for the pre-dip voltage reading 414 is between 12.5 volts and 12.6 volts.

The turn-on region 408 represents activities of the electric portion 209 of the hybrid engine 205 or the electric engine 203 starting to engage, being turned on, or a combination thereof. This example shows the voltage profile 402 with the turn-on region 408 following the initiation region 406. In this example, the turn-on region 408 includes the voltage profile 402 falling sharply to a voltage level for a dip voltage reading 416.

The dip voltage reading 416 is the voltage value for the battery 213 as the electric portion 209 of the hybrid engine 205 or the electric engine 203 is starting engage, being turned on, or a combination thereof. Continuing with this example, the voltage level for the dip voltage reading 416 is about 12.0 volts.

Continuing with the turn-on region 408, the voltage profile 402 is shown with the voltage levels to a turning-on voltage reading 418. The turning-on voltage reading 418 represents the voltage level while the electric portion 209 of the hybrid engine 205 or the electric engine 203 is activating. In this example, the turning-on voltage reading 418 is shown with the voltage level to be above the dip voltage reading 416 and below the resting voltage reading 412, the pre-dip voltage reading 414, or a combination thereof.

The turning-on voltage reading 418 is shown with a profile where the voltage level rises from the dip voltage reading 416 to an overshoot voltage level. This example shows the overshoot voltage level is below the voltage value for the pre-dip voltage reading 414. Continuing with this example, the overshoot voltage level drops a bit and remains above the voltage value of the dip voltage reading 416 for the remainder of the turn-on region 408. In this example, the overshoot voltage level is between 12.4 volts and 12.5 volts.

The running region 410 is when the electric portion 209 of the hybrid engine 205 or the electric engine 203 is operating. This example shows the voltage profile 402 with the running region 410 following the turn-on region 408. As in this example during the running region 410, the voltage profile 402 rises from the voltage values from the dip voltage reading 416, the resting voltage reading 412, the pre-dip voltage reading 414, or a combination thereof to a voltage values at a running voltage reading 420.

The running voltage reading 420 is the voltage value for the battery 213 following an engaging the electric portion 209 of the hybrid engine 205 or the electric engine 203. Continuing with this example, the voltage level for the running voltage reading 420 ripples around 14.3 volts.

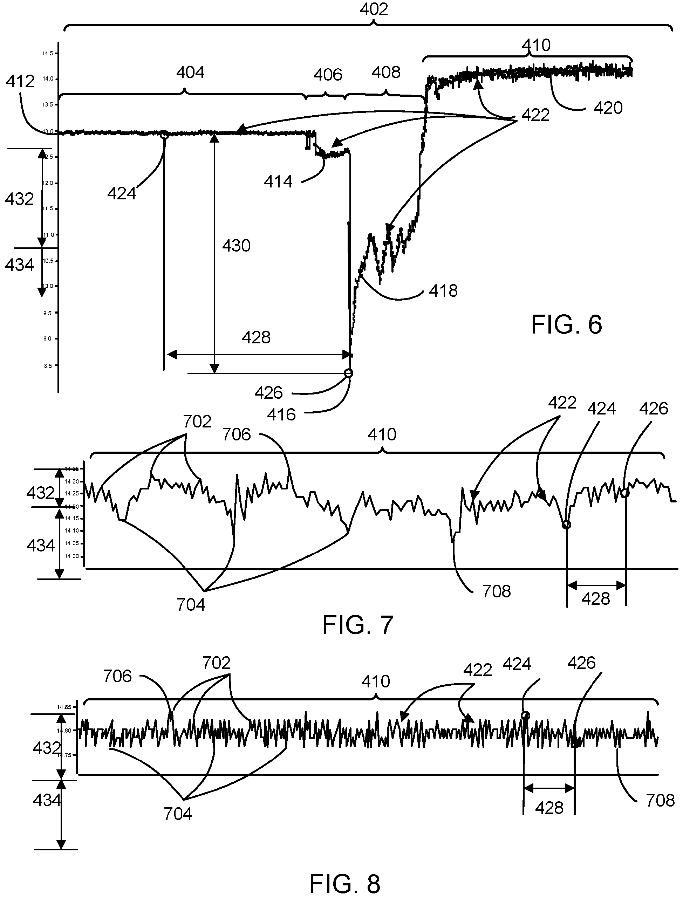

Generally, for this example, the voltage profile 402 is shown with ripples 422 along, within, and between the resting region 404, the initiation region 406, the turn-on region 408, and the running region 410. The ripples 422 represent the voltage values rapidly and incrementally changing along the voltage profile 402. The ripples 422 results in varying or different voltage values for a first voltage reading 424, a second voltage reading 426, or a combination thereof. The ripples 422 will be further described in FIG. 7 and FIG. 8.

The first voltage reading 424 and the second voltage reading 426 can be taken or provided from the resting region 404, the initiation region 406, the turn-on region 408, and the running region 410. For example, the first voltage reading 424, the second voltage reading 426, or a combination thereof can be for the resting voltage reading 412.

The usage of the term as "first" and "second" for the first voltage reading 424 and the second voltage reading 426 is a matter of convenience and do not explicitly restrict to order or importance. Naturally, there is a "first" reading in any sequence to determine the voltage values for voltage readings for the on-board diagnostics 222, however, the first voltage reading 424 and the second voltage reading 426 can be swapped in the order when one was read relative to the other. In other words, after the second voltage reading 426 is taken, a subsequent voltage value can be read with the on-board diagnostics 222 and for the sake of brevity, that subsequent reading can be termed as the first voltage reading 424.

A reading time 428 can be provide a timing separation of reading events of the on-board diagnostics 222 for the first voltage reading 424 and the second voltage reading 426 in that order or vice versa. In other words, a subsequent voltage reading follows the second voltage reading 426 and the first voltage reading 424 provides the voltage value from the subsequent voltage reading. The reference to the first voltage reading 424 is used for brevity.

The reading time 428 can be based on limitations of the vehicle system 100, the electric vehicle 202, a portion thereof, or a combination thereof. The reading time 428 can vary between or within the resting region 404, the initiation region 406, the turn-on region 408, and the running region 410. As examples, the reading time 428 can be in the order of minutes, seconds, milliseconds, microseconds, or less.

For example, the turn-on region 408 can last for about two seconds. In order to capture the voltage profile 402 and the various voltage values with the on-board diagnostics 222, the reading time 428 should be set, as an example, to provide the resolution needed. In other words, the reading time 428 should be in the order of milliseconds and definitely less than one second in this example.

Continuing with the example for the voltage reading, the first voltage reading 424, the second voltage reading 426, or a combination thereof can be for the pre-dip voltage reading 414. Further, for example, the first voltage reading 424, the second voltage reading 426, or the combination thereof can be for the dip voltage reading 416 or to determine the dip voltage reading 416. Yet further, for example, the first voltage reading 424, the second voltage reading 426, or a combination thereof can be for the overshoot voltage levels. Yet even further, for example, the first voltage reading 424, the second voltage reading 426, or a combination thereof can be for the running voltage reading 420.

Also, the first voltage reading 424, the second voltage reading 426, or a combination thereof can be taken between the resting region 404, the initiation region 406, the turn-on region 408, and the running region 410. As an example, the first voltage reading 424 can represent the resting voltage reading 412 and the second voltage reading 426 can represent the dip voltage reading 416.

A first voltage difference 430 can be the unsigned value of the subtraction of the first voltage reading 424 and the second voltage reading 426. Depending on where or when the first voltage reading 424 and the second voltage reading 426 is taken, the vehicle system 100, the electric vehicle 202, a portion thereof, or a combination thereof can determine whether the first voltage difference 430 is within an electrical range 432 or a non-electrical range 434.

The electrical range 432 provide upper and lower threshold values for the first voltage difference 430 to determine whether the electric portion 209 of the hybrid engine 205 or the electric engine 203 is being initiated.

For the electrical range 432, the first voltage difference 430 is based on the first voltage reading 424 as the resting voltage reading 412 and the second voltage reading 426 as the dip voltage reading 416. If the first voltage difference 430 is between greater than 2% and less than or equal to 10% of the resting voltage reading 412, then the first voltage difference 430 is deemed to be within the electrical range 432.

For the combustion engine 211 of FIG. 2 or a combustion portion 207 of FIG. 2 of the hybrid engine 205, if the first voltage difference 430, based on calculation earlier, is greater than 10% of the resting voltage reading 412, then the first voltage difference 430 is not within the electrical range 432 or is within the non-electrical range 434. The non-electrical range 434 refers to the voltage profile 402, as described in the context of FIG. 4, the amount of voltage drop of the dip voltage reading 416 from the resting voltage reading 412 to indicate an engine is not the electric engine 203 or the electric portion 209 of the hybrid engine 205.

The electrical range 432 is further discussed in FIG. 7 and FIG. 8 relative to the ripples 422 for the running voltage reading 420. The non-electrical range 434 is also further discussed in FIG. 7 and FIG. 8 relative to the ripples 422 for the running voltage reading 420.

As a specific example with the voltage values depicted in FIG. 4, the on-board diagnostics 222 can provide the first voltage reading 424 as the resting voltage reading 412 with the value of 12.7 volts. The on-board diagnostics 222 can also provide the second voltage reading 426 as the dip voltage reading 416 as 12.0 volts. The first voltage difference 430 is 12.7 volts minus 12.0 volts or 0.7 volts.

The electrical range 432 is greater than 2% of the first voltage reading 424 as the resting voltage reading 412 or 0.254 volts. The electrical range 432 is less than or equal to 10% of the first voltage reading 424 as the resting voltage reading 412 or 1.27 volts. The first voltage difference 430 of 0.7 volts is greater than 0.254 volts and less than 1.27 volts and is within the electrical range 432.

Referring now to FIG. 5, therein is shown is a voltage graphical view of a further example of the electric vehicle 202 of FIG. 2. The voltage graphical view depicts an example of voltage levels or values or readings for the battery 213 of FIG. 2 of the electric vehicle 202 as a hybrid vehicle different from the one shown in FIG. 4. The elements described in FIG. 5 has the same description as in FIG. 4 and all have been not been repeated in FIG. 5 for brevity.

The voltage graphical view depicts the voltage levels or values or readings when the electric portion 209 of FIG. 2 of the hybrid engine 205 of FIG. 2 before being started through running. The voltage graphical view does not depict the voltage levels or values or readings for the combustion portion 207 of the hybrid engine 205. The description for this voltage graphical view can also be applicable when the electric vehicle 202 is an electric vehicle and with the electric engine 203 of FIG. 2.

As similarly described in FIG. 4, the voltage graphical view depicts a voltage profile 402 relative to a y-axis and an x-axis. The y-axis represents the voltage values or voltage readings for the battery 213. The values noted on the y-axis are shown as examples and embodiments are not limited to the values shown along the y-axis.

The voltage profile 402 represents voltage readings for the battery 213 for various activities of the electric vehicle 202. The voltage profile 402 can be obtained as part of the on-board diagnostics 222 of FIG. 2. This example is similar but not the same as in FIG. 4 where the voltage profile 402 is shown to include a resting region 404, a turn-on region 408, and a running region 410.

The resting region 404 has the resting voltage reading 412. The resting voltage reading 412 is the voltage value for the battery 213 before ignition is engaged or an ignition activity. In this example, the resting voltage reading 412 is shown to be around 12.25 volts.

The turn-on region 408 represents activities of the electric portion 209 of the hybrid engine 205 or the electric engine 203 starting to engage, being turned on, or a combination thereof. This example shows the voltage profile 402 with the turn-on region 408 following the resting region 404. In this example, the turn-on region 408 includes the voltage profile 402 falling sharply to a voltage level for a dip voltage reading 416.

The dip voltage reading 416 is the voltage value for the battery 213 as the electric portion 209 of the hybrid engine 205 or the electric engine 203 is starting engage, being turned on, or a combination thereof. Continuing with this example, the voltage level for the dip voltage reading 416 is about 12.15 volts.

Continuing with the turn-on region 408, the voltage profile 402 is shown with the voltage levels to a turning-on voltage reading 418. The turning-on voltage reading 418 represents the voltage level while the electric portion 209 of the hybrid engine 205 or the electric engine 203 is activating. In this example, the turning-on voltage reading 418 is shown with the voltage level to be above the dip voltage reading 416 and below the resting voltage reading 412.

The turning-on voltage reading 418 is shown with a profile where the voltage level rises from the dip voltage reading 416 to an overshoot voltage level. This example shows the overshoot voltage level is below the voltage value for the resting voltage reading 412 and continues for some time with little change to the voltage values of the ripples 422. Continuing with this example, the overshoot voltage level drops a bit with more apparent change in values for the ripples 422 with greater difference between the high and low voltage values for the ripples 422. The low voltage values for the ripples 422 can fall below the voltage value of the dip voltage reading 416 for the remainder of the turn-on region 408.

The running region 410 is when the electric portion 209 of the hybrid engine 205 or the electric engine 203 is operating. This example shows the voltage profile 402 with the running region 410 following the turn-on region 408. In this example during the running region 410, the voltage profile 402 rises from the voltage values from the dip voltage reading 416 and the ripples 422 found at the end of the turn-on region 408, the resting voltage reading 412, or a combination thereof to a voltage values at a running voltage reading 420.

The running voltage reading 420 is the voltage value for the battery 213 following an engaging the electric portion 209 of the hybrid engine 205 or the electric engine 203. Continuing with this example, the voltage level for the running voltage reading 420 is around 14.1 volts.

Generally, for this example, the voltage profile 402 is shown with the ripples 422 along, within, and between the resting region 404, the turn-on region 408, and the running region 410. The ripples 422 results in varying or different voltage values for a dip voltage reading 416, a second voltage reading 426, or a combination thereof. The ripples 422 will be further described in FIG. 7 and FIG. 8.

The first voltage reading 424 and the second voltage reading 426 can be within the resting region 404, the turn-on region 408, and the running region 410. For example, the first voltage reading 424, the second voltage reading 426, or a combination thereof can be for the resting voltage reading 412.

A reading time 428 can be provide a timing separation of reading events of the on-board diagnostics 222 for the first voltage reading 424 and the second voltage reading 426 in that order or vice versa. In other words, a subsequent voltage reading follows the second voltage reading 426 and the first voltage reading 424 provides the voltage value from the subsequent voltage reading. The reference to the first voltage reading 424 is used for brevity.

The reading time 428 can be based on limitations of the vehicle system 100, the electric vehicle 202, a portion thereof, or a combination thereof. The reading time 428 can vary between or within the resting region 404, the initiation region 406, the turn-on region 408, and the running region 410. As examples, the reading time 428 can be in the order of minutes, seconds, milliseconds, microseconds, or less.

Continuing with the example for the voltage reading, the first voltage reading 424, the second voltage reading 426, or a combination thereof can be for the resting voltage reading 412. Further, for example, the first voltage reading 424, the second voltage reading 426, or the combination thereof can be for the dip voltage reading 416 or to determine the dip voltage reading 416. Yet further, for example, the first voltage reading 424, the second voltage reading 426, or a combination thereof can be for the overshoot voltage levels. Yet even further, for example, the first voltage reading 424, the second voltage reading 426, or a combination thereof can be for the running voltage reading 420.

Also, the first voltage reading 424, the second voltage reading 426, or a combination thereof can be taken between the resting region 404, the initiation region 406, the turn-on region 408, and the running region 410. As an example, the first voltage reading 424 can represent the resting voltage reading 412 and the second voltage reading 426 can represent the dip voltage reading 416.

A first voltage difference 430 can be the unsigned value of the subtraction of the first voltage reading 424 and the second voltage reading 426. Depending on where or when the first voltage reading 424 and the second voltage reading 426 is taken, the vehicle system 100, the electric vehicle 202, a portion thereof, or a combination thereof can determine whether the first voltage difference 430 is within an electrical range 432 or a non-electrical range 434.

The electrical range 432 provide upper and lower threshold values for the first voltage difference 430 to determine whether the electric portion 209 of the hybrid engine 205 or the electric engine 203 is being initiated.

For the electrical range 432, the first voltage difference 430 is based on the first voltage reading 424 as the resting voltage reading 412 and the second voltage reading 426 as the dip voltage reading 416. If the first voltage difference 430 is between greater than 2% and less than or equal to 10% of the resting voltage reading 412, then the first voltage difference 430 is deemed to be within the electrical range 432.

For the combustion engine 211 of FIG. 2 or the combustion portion 207 of FIG. 2 of the hybrid engine 205, if the first voltage difference 430, based on calculation earlier, is greater than 10% of the resting voltage reading 412, then the first voltage difference 430 is not within the electrical range 432 or is within the non-electrical range 434. The non-electrical range 434 refers to the voltage profile 402, as described here, the amount of voltage drop of the dip voltage reading 416 from the resting voltage reading 412 to indicate an engine is not the electric engine 203 or the electric portion 209 of the hybrid engine 205.

The electrical range 432 is further discussed in FIG. 7 and FIG. 8 relative to the ripples for the running voltage reading 420. The non-electrical range 434 is also further discussed in FIG. 7 and FIG. 8 relative to the ripples for the running voltage reading 420.

As a specific example with the voltage values depicted in FIG. 5, the on-board diagnostics 222 can provide the first voltage reading 424 as the resting voltage reading 412 with the value of 12.25 volts. The on-board diagnostics 222 can also provide the second voltage reading 426 as the dip voltage reading 416 as 12.15 volts. The first voltage difference 430 is 12.25 volts minus 12.15 volts or 0.10 volts.

The electrical range 432 is greater than 2% of the first voltage reading 424 as the resting voltage reading 412 or 0.245 volts. The electrical range 432 is less than or equal to 10% of the first voltage reading 424 as the resting voltage reading 412 or 1.23 volts. The first voltage difference 430 of 0.10 volts is greater than 0.245 volts and less than 1.23 volts and is within the electrical range 432.

Referring now to FIG. 6, therein is shown is a voltage graphical view of an example of the combustion vehicle 224 of FIG. 2. The voltage graphical view depicts an example of voltage levels or values or readings for the battery 213 of FIG. 2 of the combustion vehicle 224. The voltage graphical view shown in FIG. 6 depicts the voltage levels or readings when the combustion engine 211 of FIG. 2 is started and running. The description for this voltage graphical view can also be applicable when the electric vehicle 202 is the hybrid vehicle operating the combustion portion 207 of FIG. 2 of the hybrid engine 205 of FIG. 2.

The voltage graphical view shown in FIG. 6 is not for the electric engine 203 of FIG. 2 nor for the electric portion 209 of FIG. 2 of the hybrid engine 205 of FIG. 2. The elements described in FIG. 5 has the same description as in FIG. 4 and all have been not been repeated in FIG. 5 for brevity.

The voltage graphical view depicts a voltage profile 402 relative to a y-axis and an x-axis. The y-axis represents the voltage values or voltage readings for the battery 213. The values noted on the y-axis are shown as examples and embodiments are not limited to the values shown along the y-axis. The x-axis represents time although the x-axis is not shown in FIG. 6.

The voltage profile 402 represents voltage readings for the battery 213 for various activities of the combustion vehicle 224. The voltage profile 402 can be obtained as part of the on-board diagnostics 222 of FIG. 2. In this example, the voltage profile 402 is shown to include a resting region 404, an initiation region 406, a turn-on region 408, and a running region 410.

The resting region 404 is before an ignition is engaged or an ignition activity. The resting region 404 has the resting voltage reading 412. The resting voltage reading 412 is the voltage value for the battery 213 before ignition is engaged or an ignition activity. In this example, the resting voltage reading 412 is shown to be around 13.0 volts.

The initiation region 406 is when the ignition is initially engaged. This example shows the voltage profile 402 with the initiation region 406 following the resting region 404. As in this example, during the initiation region 406, the voltage profile 402 drops from the voltage level from the resting voltage reading 412 to a voltage level at a pre-dip voltage reading 414.

The pre-dip voltage reading 414 is the voltage value for the battery 213 following an initial engaging of the ignition. Continuing with this example, the voltage level for the pre-dip voltage reading 414 is between 12.5 volts and 12.9 volts.

The turn-on region 408 represents activities of the combustion engine 211 or the combustion portion 207 of the hybrid engine 205 starting to engage, being turned on, or a combination thereof. This example shows the voltage profile 402 with the turn-on region 408 following the initiation region 406. In this example, the turn-on region 408 includes the voltage profile 402 falling sharply to a voltage level for a dip voltage reading 416.

The dip voltage reading 416 is the voltage value for the battery 213 as the combustion portion 207 of the hybrid engine 205 or the combustion engine 211 is starting engage, being turned on, or a combination thereof. Continuing with this example, the voltage level for the dip voltage reading 416 is about 8.4 volts.

Continuing with the turn-on region 408, the voltage profile 402 is shown with the voltage levels to a turning-on voltage reading 418. The turning-on voltage reading 418 represents the voltage level while the combustion engine 211 or the combustion portion 207 of the hybrid engine 205 is activating. In this example, the turning-on voltage reading 418 is shown with the voltage level to be above the dip voltage reading 416 and below the resting voltage reading 412, the pre-dip voltage reading 414, or a combination thereof.

The turning-on voltage reading 418 is shown with a profile where the voltage level rises from the dip voltage reading 416 to a ripple ramp voltage profile. This example shows the ripple ramp voltage profile is below the voltage value for the pre-dip voltage reading 414. Continuing with this example, the ripple ramp voltage profile cycles with voltage peaks and lows above the dip voltage reading 416 for the remainder of the turn-on region 408.

The running region 410 is when the combustion engine 211 or the combustion portion 207 of the hybrid engine 205 is operating. This example shows the voltage profile 402 with the running region 410 following the turn-on region 408. As in this example during the running region 410, the voltage profile 402 rises from the voltage values from the dip voltage reading 416, the resting voltage reading 412, the pre-dip voltage reading 414, or a combination thereof to a voltage values at a running voltage reading 420.

The running voltage reading 420 is the voltage value for the battery 213 following an engaging the combustion engine 211 or the combustion portion 207 of the hybrid engine 205. Continuing with this example, the voltage level for the running voltage reading 420 is around 14.0 volts.

Generally for this example, the voltage profile 402 is shown with ripples 422 along, within, and between the resting region 404, the initiation region 406, the turn-on region 408, and the running region 410. The ripples 422 represent the voltage values rapidly and incrementally changing along the voltage profile 402. The ripples 422 results in varying or different voltage values for a first voltage reading 424, a second voltage reading 426, or a combination thereof. The ripples 422 will be further described in FIG. 7 and FIG. 8.

The first voltage reading 424 and the second voltage reading 426 can be within the resting region 404, the initiation region 406, the turn-on region 408, and the running region 410. For example, the first voltage reading 424, the second voltage reading 426, or a combination thereof can be for the resting voltage reading 412.

A reading time 428 can be provide a timing separation of reading events of the on-board diagnostics 222 for the first voltage reading 424 and the second voltage reading 426 in that order or vice versa. In other words, a subsequent voltage reading follows the second voltage reading 426 and the first voltage reading 424 provides the voltage value from the subsequent voltage reading. The reference to the first voltage reading 424 is used for brevity.

For example, the turn-on region 408 can last for about 10 milliseconds. In order to capture the voltage profile 402 and the various voltage values with the on-board diagnostics 222, the reading time 428 should be set, as an example, to provide the resolution needed. In other words, the reading time 428 should be in the order of milliseconds or less.

The reading time 428 can be based on limitations of the vehicle system 100, the combustion vehicle 224, a portion thereof, or a combination thereof. The reading time 428 can vary between or within the resting region 404, the initiation region 406, the turn-on region 408, and the running region 410. As examples, the reading time 428 can be in the order of minutes, seconds, milliseconds, microseconds, or less.

Continuing with the example for the voltage reading, the first voltage reading 424, the second voltage reading 426, or a combination thereof can be for the pre-dip voltage reading 414. Further, for example, the first voltage reading 424, the second voltage reading 426, or the combination thereof can be for the dip voltage reading 416 or to determine the dip voltage reading 416. Yet further, for example, the first voltage reading 424, the second voltage reading 426, or a combination thereof can be for the ripple ramp voltage profiles. Yet even further, for example, the first voltage reading 424, the second voltage reading 426, or a combination thereof can be for the running voltage reading 420.

Also, the first voltage reading 424, the second voltage reading 426, or a combination thereof can be taken between the resting region 404, the initiation region 406, the turn-on region 408, and the running region 410. As an example, the first voltage reading 424 can represent the resting voltage reading 412 and the second voltage reading 426 can represent the dip voltage reading 416.

A first voltage difference 430 can be the unsigned value of the subtraction of the first voltage reading 424 and the second voltage reading 426. Depending on where or when the first voltage reading 424 and the second voltage reading 426 is taken, the vehicle system 100, the combustion vehicle 224, a portion thereof, or a combination thereof can determine whether the first voltage difference 430 is within an electrical range 432 or a non-electrical range 434.

The electrical range 432 provide upper and lower threshold values for the first voltage difference 430 to determine whether the electric portion 209 of the hybrid engine 205 or the electric engine 203 is being initiated.

For the electrical range 432, the first voltage difference 430 is based on the first voltage reading 424 as the resting voltage reading 412 and the second voltage reading 426 as the dip voltage reading 416. If the first voltage difference 430 is between greater than 2% and less than or equal to 10% of the resting voltage reading 412, then the first voltage difference 430 is deemed to be within the electrical range 432.

For a combustion engine 211 or a combustion portion 207 of the hybrid engine 205, if the first voltage difference 430, based on calculation earlier, is greater than 10% of the resting voltage reading 412, then the first voltage difference 430 is not within the electrical range 432 or is within the non-electrical range 434. The non-electrical range 434 refers to the voltage profile 402, as described here, the amount of voltage drop of the dip voltage reading 416 from the resting voltage reading 412 to indicate an engine is not the electric engine 203 or the electric portion 209 of the hybrid engine 205.

The electrical range 432 is further discussed in FIG. 7 and FIG. 8 relative to the ripples for the running voltage reading 420. The non-electrical range 434 is also further discussed in FIG. 7 and FIG. 8 relative to the ripples for the running voltage reading 420.

As a specific example with the voltage values depicted in FIG. 6, the on-board diagnostics 222 can provide the first voltage reading 424 as the resting voltage reading 412 with the value of 13.0 volts. The on-board diagnostics 222 can also provide the second voltage reading 426 as the dip voltage reading 416 as 8.4 volts. The first voltage difference 430 is 13.0 volts minus 8.4 volts or 4.6 volts.

The electrical range 432 is greater than 2% of the first voltage reading 424 as the resting voltage reading 412 or 0.26 volts. The electrical range 432 is less than or equal to 10% of the first voltage reading 424 as the resting voltage reading 412 or 2.6 volts. The first voltage difference 430 of 4.6 volts is greater than 0.26 volts but not less than or equal to 2.6 volts and is not within the electrical range 432. The first voltage difference 430 of 4.6 volts is greater than 10% of the resting voltage reading of 2.6 volts and is within the non-electrical range 434.

Referring now to FIG. 7, therein is shown a ripple voltage graphical view of an example of the combustion vehicle 224 of FIG. 2. The ripple voltage graphical view represents a detailed view of a portion the running region 410 of FIG. 6 of the voltage profile 402 of FIG. 6, as an example. Similarly described in FIG. 6, the ripple voltage graphical view shown in FIG. 7 can also be applicable to the combustion portion 207 of FIG. 2 of the hybrid engine 205 of FIG. 2 for the electric vehicle 202 of FIG. 2 as a hybrid vehicle.

As seen in FIG. 7, the ripples 422 in the voltage profile 402 can be attributed to the noise from the alternator 215 of FIG. 2. The ripples 422 represent the voltage values rapidly and incrementally changing along the voltage profile 402. As a specific example, the ripples 422 shown in FIG. 7 represent the increases and decreases of the voltage values of the running voltage reading 420 of FIG. 6.

As discussed in FIG. 6, the on-board diagnostics 222 of FIG. 2 can provide the first voltage reading 424, the second voltage reading 426, or a combination thereof of various voltage values of the ripples 422. The ripples 422 are shown with spikes 702 and valleys 704. Each of the spikes 702 represents a local maximum voltage value relative the voltage values immediately preceding or following each of the spikes 702. Each of the valleys 704 represents a local minimum voltage value relative the voltage values immediately preceding or following each of the valleys 704.

The first voltage reading 424, the second voltage reading 426, or a combination thereof can provide a ripple peak voltage reading 706. The ripple peak voltage reading 706 can represent any one of the voltage value of any of the spikes 702 or the voltage value that is the highest compared to all the spikes 702 along the ripples 422 in the running region 410.

The first voltage reading 424, the second voltage reading 426, or a combination thereof can provide a ripple minima voltage reading 708. The ripple minima voltage reading 708 can represent any one of the voltage value of any of the valleys 704 or the voltage value that is the lowest compared to all the valleys 704 along the ripples 422 in the running region 410.

As applied to the highest voltage value, FIG. 7 shows the ripple peak voltage reading 706 with a voltage value of about 14.35 volts. As applied to the lowest voltage value, FIG. 7 shows the ripple minima voltage reading 708 with a voltage value of about 14.06 volts.

Returning to the description of the first voltage difference 430 where the first voltage reading 424 is the ripple peak voltage reading 706 and the second voltage reading 426 is the ripple minima voltage reading 708, the first voltage difference 430 would be 14.35 volts minus 14.06 volts or 0.29 volts.

In the context of the ripples 422, the electrical range 432 represents when the first voltage difference 430 is less than 1% of the voltage value for the ripple peak voltage reading 706. Similarly in the context of the ripples 422, the non-electrical range 434 represents when the first voltage difference 430 is greater than or equal to 1% and less than 3% of the voltage value for the ripple peak voltage reading 706.

The reading time 428 can differ when for the first voltage reading 424, the second voltage reading 426, or a combination thereof to determine the ripple peak voltage reading 706, the ripple minima voltage reading 708, or a combination thereof relative to the value of the reading time for the rest of the voltage profile 402.

In the example shown in FIG. 7, the voltage value for 1% and for 3% of the ripple peak voltage reading 706 is 0.144 volts and 0.431 volts. The first voltage difference 430 is 0.29 volts, which is greater than 0.144 volts and less than 0.431 volts, the ripples 422 shown in FIG. 7 are in the non-electrical range 434. Also, the first voltage difference 430 is 0.29 volts is not less than 0.144 volts, then the ripples 422 in FIG. 7 do not fall in the electrical range 432.

Referring now to FIG. 8, therein is shown a ripple voltage graphical view of an example of the electric vehicle 202 of FIG. 2. The ripple voltage graphical view represents a detailed view of a portion the running region 410 of FIG. 5 of the voltage profile 402 of FIG. 5, as an example.

Similarly mentioned in FIG. 5, the ripple voltage graphical view shown in FIG. 8 is for the electric portion 209 of FIG. 2 of the hybrid engine 205 of FIG. 2 for the electric vehicle 202 of FIG. 2 as a hybrid vehicle. Similarly mentioned in FIG. 5, the ripple voltage graphical view shown in FIG. 8 can also be applicable to the electric engine 203 of FIG. 2 for the electric vehicle 202 of FIG. 2 as an electric vehicle.

As seen in FIG. 8, the ripples 422 in the voltage profile 402 can be attributed to the noise from the alternator 215 of FIG. 2. The ripples 422 represent the voltage values changing along the voltage profile 402. As a specific example, the ripples 422 shown in FIG. 8 represent the increases and decreases of the voltage value of the running voltage reading 420 of FIG. 5.

As discussed in FIG. 5, the on-board diagnostics 222 of FIG. 2 can provide the first voltage reading 424, the second voltage reading 426, or a combination thereof of the various voltage values of the ripples 422. The ripples 422 are shown with spikes 702 and valleys 704. Each of the spikes 702 represents a local maximum voltage value relative the voltage values immediately preceding or following each of the spikes 702. Each of the valleys 704 represents a local minimum voltage value relative the voltage values immediately preceding or following each of the valleys 704.

The first voltage reading 424, the second voltage reading 426, or a combination thereof can provide a ripple peak voltage reading 706. The ripple peak voltage reading 706 can represent any one of the voltage value of any of the spikes 702 or the voltage value that is the highest compared to all the spikes 702 along the ripples 422 in the running region 410.

The first voltage reading 424, the second voltage reading 426, or a combination thereof can provide a ripple minima voltage reading 708. The ripple minima voltage reading 708 can represent any one of the voltage value of any of the valleys 704 or the voltage value that is the lowest compared to all the valleys 704 along the ripples 422 in the running region 410.

As applied to the highest voltage value, FIG. 8 shows the ripple peak voltage reading 706 with a voltage value of about 14.84 volts. As applied to the lowest voltage value, FIG. 8 shows the ripple minima voltage reading 708 with a voltage value of about 14.76 volts.

Returning to the description of the first voltage difference 430 where the first voltage reading 424 is the ripple peak voltage reading 706 and the second voltage reading 426 is the ripple minima voltage reading 708, the first voltage difference 430 would be 14.84 volts minus 14.76 volts or 0.08 volts.

In the context of the ripples 422, the electrical range 432 represents when the first voltage difference 430 is less than 1% of the voltage value for the ripple peak voltage reading 706. Similarly in the context of the ripples 422, the non-electrical range 434 represents when the first voltage difference 430 is greater than or equal to 1% and less than 3% of the voltage value for the ripple peak voltage reading 706.

The reading time 428 can differ when for the first voltage reading 424, the second voltage reading 426, or a combination thereof to determine the ripple peak voltage reading 706, the ripple minima voltage reading 708, or a combination thereof relative to the value of the reading time for the rest of the voltage profile 402.

In the example shown in FIG. 8, the voltage value for 1% and for 3% of the ripple peak voltage reading 706 is 0.148 volts and 0.445 volts. The first voltage difference 430 is 0.08 volts, which is not greater than 0.148 volts even though less than 0.445 volts, the ripples 422 shown in FIG. 8 are not within the non-electrical range 434. Also, the first voltage difference 430 is 0.08 volts is less than 0.144 volts, then the ripples 422 in FIG. 8 do fall within the electrical range 432.

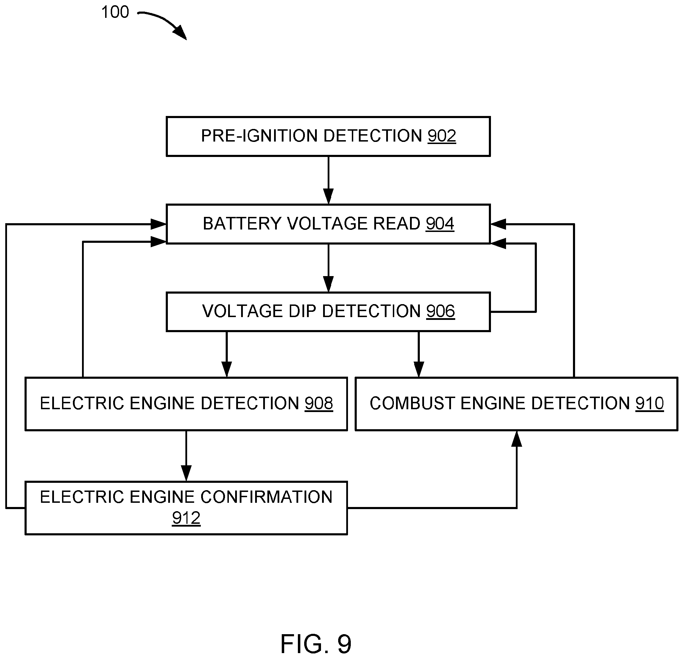

Referring now to FIG. 9, therein is shown a control flow of the vehicle system 100. The control flow in FIG. 9 depicts and describes an example of how to determine whether the voltage profile 402 of FIG. 4 through FIG. 8 based on the on-board diagnostics 222 of FIG. 2 is within the electrical range 432 of FIG. 4 through FIG. 8 or in non-electrical range 434 of FIG. 4 through FIG. 8.

For illustrative purposes, the vehicle system 100 is described in FIG. 9 relative to FIG. 5 and FIG. 8, although it is understood that the description in FIG. 9 can be applicable to other embodiments. For example, the description in FIG. 9 can apply to FIG. 4 as another example of a hybrid engine 205 of FIG. 2 or for an electric engine 203 of FIG. 2 for an electric car. Also for example, the description in FIG. 9 can also apply to FIG. 6 and FIG. 7 for combustion engine 211 of FIG. 2, or the combustion portion 207 of FIG. 2 of the hybrid engine 205 where appropriate.

The vehicle system 100 can include the following modules: a pre-ignition detection 902, a battery voltage read 904, a voltage dip detection 906, an electric engine detection 908, a combust engine detection 910, an electric engine confirmation 912, or a combination thereof. The aforementioned modules can be included in the first software 326 of FIG. 3, the second software 342 of FIG. 3, or a combination thereof. The first software 326, the second software 342, or a combination thereof can be executed with the first control circuit 312 of FIG. 3, the second control circuit 334 of FIG. 3, the vehicle control circuit 206 of FIG. 2, or a combination thereof.

The pre-ignition detection 902 can be coupled to the battery voltage read 904. The battery voltage read 904 can be coupled to the voltage dip detection 906. The voltage dip detection 906 can be coupled to the electric engine detection 908 and the combust engine detection 910. The electric engine detection 908 can be coupled to the electric engine confirmation 912 and the battery voltage read 904. The electric engine confirmation 912 can also be coupled to the battery voltage read 904 and the combust engine detection 910.

The modules can be coupled using wired or wireless connections, by including an output of one module as an input of the other module, by including operations of one module influence operation of the other module, or a combination thereof. The modules can be directly coupled with no intervening structures or objects other than the connector there-between, or indirectly coupled.

The pre-ignition detection 902 is configured to detect an event, a trigger, an activity, or a combination thereof as an indication that an ignition event can be following. The pre-ignition detection 902 can detect the indication located proximate or remote to the electric vehicle 202 of FIG. 2 or the combustion vehicle 224 of FIG. 2.

As an example, the indication can be based on an invocation of a mobile application on the first device 102 of FIG. 1 as a smartphone. As another example, the indication can be based on car keyless frequency operated button (FOB) near the location of the electric vehicle 202 or the combustion vehicle 224. Further, for example, the indication can be based on the car key inserted into the ignition slot before the car key is turned to crank or turn on the engine.

The pre-ignition detection 902 can detect the indication with the environmental sensors 210 of FIG. 2. The pre-ignition detection 902 can utilize the environmental sensors 210 with one or more control circuits, such as the first control circuit 312 of FIG. 3, the second control circuit 334 of FIG. 3, the vehicle control circuit 206 of FIG. 2, or a combination thereof. The pre-ignition detection 902 can also detect the indication with one or more communication circuits, such as the first communication circuit 316 of FIG. 3, the second communication circuit 336 of FIG. 3, the vehicle communication circuit 204 of FIG. 2, or a combination thereof.

As the pre-ignition detection 902 detects the indication in the electric vehicle 202 or the combustion vehicle 224, the voltage profile 402 of FIG. 5 is in the resting region 404 of FIG. 5.

The control flow can pass from the pre-ignition detection 902 to the battery voltage read 904. For example, the control flow can pass a processing result as an output from the pre-ignition detection 902 to an input of the battery voltage read 904.

The battery voltage read 904 is configured to receive the on-board diagnostics 222 of FIG. 2 for the battery 213 of FIG. 2. As described earlier, the first voltage reading 424 of FIG. 5, the second voltage reading 426 of FIG. 5, or a combination thereof can be provided as the on-board diagnostics 222.

The battery voltage read 904 can receive the first voltage reading 424 as a potential voltage value for the resting voltage reading 412 of FIG. 5 for the battery 213. The battery voltage read 904 can continue to receive the on-board diagnostics 222 for the second voltage reading 426.

As an example, the on-board diagnostics 222 can be read for the first voltage reading 424, the second voltage reading 426, or a combination thereof taken along the resting region 404, the initiation region 406 of FIG. 5, or a combination thereof of the voltage profile 402. The battery voltage read 904 can take multiple reads for the first voltage reading 424, the second voltage reading 426, or the combination thereof.

The reading time 428 can be adjusted such that the first voltage reading 424, the second voltage reading 426, or a combination thereof are both taken at the running region 410. The reading time 428 can also be adjusted such that the first voltage reading 424 or the second voltage reading 426 is taken at the running region 410 while the other is taken at the initiation region 406.

The battery voltage read 904 can also be configured to compare the first voltage reading 424 and the second voltage reading 426 to determine which is greater. If the first voltage reading 424 is less than the second voltage reading 426, then the battery voltage read 904 can swap the two voltage values or set the second voltage reading 426 to the voltage value from the first voltage reading 424 previously read. The battery voltage read 904 can then repeat to receive the first voltage reading 424 for the battery 213. The battery voltage read 904 would continue to loop within itself for the repeat. If the first voltage reading 424 is not less than the second voltage reading 426, then the control flow can continue to the voltage dip detection 906.

The battery voltage read 904 can receive the on-board diagnostics 222, the first voltage reading 424, the second voltage reading 426, or a combination thereof with one or more communication circuits, such as the first communication circuit 316, the second communication circuit 336, the vehicle communication circuit 204, or a combination thereof. The battery voltage read 904 can process the first voltage reading 424 and the second voltage reading 426 to determine which is greater operating one or more control circuits, such as the first control circuit 312, the second control circuit 334, the vehicle control circuit 206, or a combination thereof. The battery voltage read 904 can store the on-board diagnostics 222, the first voltage reading 424, the second voltage reading 426, or a combination thereof in one or more storage circuits, such as the first storage circuit 314 of FIG. 3, the second storage circuit 346 of FIG. 3, the vehicle storage circuit 208 of FIG. 2, or a combination thereof.

The control flow can pass from the battery voltage read 904 to the voltage dip detection 906. The control flow can pass similarly as described above between the pre-ignition detection 902 and the battery voltage read 904. The voltage dip detection 906 can also include as inputs the processing results of the battery voltage read 904 in addition to the processing results from the pre-ignition detection 902.

The voltage dip detection 906 is configured to detect a change in the voltage value of the battery 213 to determine the voltage value for the dip voltage reading 416 of FIG. 5. The voltage dip detection 906 can determine the voltage value for the dip voltage reading 416 by calculating the first voltage difference 430 of FIG. 5 with the first voltage reading 424 or the second voltage reading 426 as the resting voltage reading 412 and the other as a potential value for the dip voltage reading 416. The calculation of the first voltage difference 430 is described in FIG. 5 as well as in other figures.

As described in FIG. 5, the electrical range 432 of FIG. 5 represents the amount of voltage change indicating activity for an electric engine 203 of FIG. 2 or the electric portion 209of the hybrid engine 205. Also described in FIG. 5, the non-electrical range 434 of FIG. 5 represents the amount of voltage change indicating activity for the combustion engine 211 or a combustion portion 207 in the hybrid engine 205.

As an example, if the first voltage difference 430 is between greater than 2% and less than or equal to 10% of the resting voltage reading 412, then the first voltage difference 430 is deemed to be within the electrical range 432. Continuing with the example, if the first voltage difference 430 is greater than 10% of the resting voltage reading 412, then the first voltage difference 430 is not within the electrical range 432 or is within the non-electrical range 434.

When the voltage value for the first voltage difference 430 is not in the electrical range 432 nor the non-electrical range 434, then the first voltage difference 430 is less than or equal 2% of the resting voltage reading 412. In this situation, the control flow returns to the battery voltage read 904. The battery voltage read 904 continues to receive the on-board diagnostics for the first voltage reading 424, the second voltage reading 426, or a combination thereof.

The loop back to the battery voltage read 904 is part of the function of the voltage dip detection 906 to filter out a false detection 914 of the dip voltage reading 416. The voltage dip detection 906 performs a correct detection 916 of the dip voltage reading 416 when the first voltage difference 430 is within either the electrical range 432 or the non-electrical range 434.

The correct detection 916 based off the dip voltage reading 416 and the determination of the first voltage difference 430 falling within the electrical range 432 commences for a start event 920 to be detected by the electric vehicle 202 of FIG. 2. The start event 920 is for the electric vehicle 202 with the electric engine 203 being started or as a hybrid vehicle with the electric portion 209 of the hybrid engine 205 being started.

The start event 920 indicates an ignition has been initiated. The start event 920 represents "ready-to-drive" or "start-up" event. The start event 920 can also be used as part of the indication of when a trip commences for the vehicle.

The voltage dip detection 906 is configured to commence detection the start event 920 based on the correct detection 916 of the dip voltage reading 416. The voltage dip detection 906 is also configured to determinate that the first voltage difference 430 is within the electrical range 432.

When the voltage dip detection 906 determines that the first voltage difference 430 is within the electrical range 432, then the control flow can continue with the electric engine detection 908 with the processing output from the voltage dip detection 906 and the previous modules available to the electric engine detection 908. When the voltage dip detection 906 determines that the first voltage difference 430 is within the non-electrical range 434, then the control flow can continue with the combust engine detection 910 with the processing output from the voltage dip detection 906 and the previous modules available to the combust engine detection 910.

The voltage dip detection 906 can receive or transmit information or data with one or more communication circuits, such as the first communication circuit 316, the second communication circuit 336, the vehicle communication circuit 204, or a combination thereof. The voltage dip detection 906 can store the information or data generated or received in one or more storage circuits, such as the first storage circuit 314 of FIG. 3, the second storage circuit 346 of FIG. 3, the vehicle storage circuit 208 of FIG. 2, or a combination thereof. The voltage dip detection 906 can perform the processing with one or more control circuits, such as the first control circuit 312, the second control circuit 334, the vehicle control circuit 206, or a combination thereof.

The electric engine detection 908 is configured to continue determine the start event 920 for the electric engine 203 or the electric portion 209 of the hybrid engine 205. The electric engine detection 908 can receive the on-board diagnostics 222 for ignition factors 226. The ignition factors 226 represents other information available to the vehicle system 100 that can be used to confirm the start event 920 without the need for information for the revolutions per minute 918 (RPM). As examples of ignition factors 226 can include an ignition message 230 or an ignition status 228.

The ignition message 230 is an indication available to the vehicle system 100, the electric vehicle 202, or a combination thereof that the engine is turned on or turned off. The ignition message 230 can be provided for the electric engine 203 or the electric portion 209 of the hybrid engine 205. The ignition message 230 can also be provided for the combustion engine 211 or a combustion portion 207 of FIG. 2 of the hybrid engine 205. The content of the ignition message 230 can be the same or can be different between the electric engine 203 or the electric portion 209 of the hybrid engine 205, and with the combustion engine 211 or the combustion portion 207 of the hybrid engine 205.

The vehicle system 100, the electric vehicle 202, or a combination thereof can receive the ignition message 230 to continue determination of the start event 920 for the electric engine 203 or the electric portion 209 of the hybrid engine 205. As an example, the vehicle system 100 can receive the ignition message 230 utilizing the on-board diagnostics 222.

The ignition status 228 is an indication that the engine is turned on or turned off. Similar to the ignition message 230, as an example, the ignition status 228 can be provided for the electric engine 203 or the electric portion 209 of the hybrid engine 205. Also similar to the ignition message 230, as an example, the ignition status 228 can also be provided for the combustion engine 211 or the combustion portion 207 of the hybrid engine 205, which does not necessarily be based on the information for the revolutions per minute 918.

The content of the ignition status 228 can be the same or can be different between the electric engine 203 or the electric portion 209 of the hybrid engine 205, and with the combustion engine 211 or the combustion portion 207 of the hybrid engine 205. As an example, the vehicle system 100 can poll for the ignition status 228. As a specific example, the vehicle system 100, the electric vehicle 202, or a combination thereof can receive or poll for the ignition status 228 utilizing the on-board diagnostics 222.

The electric engine detection 908 can continue to determine the start event 920 with the ignition factors 226. The ignition message 230, the ignition status 228, or a combination thereof can provide information from the electric vehicle 202 that the ignition has been turned on. As such, the electric engine detection 908 affirms the correct detection 916 from the voltage dip detection 906.

The electric engine detection 908 can ensure validity of the information in the ignition factors 226 in a number for ways. For example, the electric engine detection 908 can repeat the reads or receive the on-board diagnostics 222 to verify consistency in the information received regarding the ignition. The electric engine detection 908 can read or receive the ignition message 230, the ignition status 228, or a combination thereof.

As another example, the electric engine detection 908 can vary the time between the reads or receives of the on-board diagnostics 222 to avoid an early read or a late read of the ignition factors 226. As a further example, the electric engine detection 908 can toggle the reads or receives between the ignition message 230 and the ignition status 228 to confirm one with the other.

The electric engine detection 908 can receive or transmit information or data with one or more communication circuits, such as the first communication circuit 316, the second communication circuit 336, the vehicle communication circuit 204, or a combination thereof. The electric engine detection 908 can store the information or data generated or received in one or more storage circuits, such as the first storage circuit 314, the second storage circuit 346, the vehicle storage circuit 208, or a combination thereof. The electric engine detection 908 can perform the processing with one or more control circuits, such as the first control circuit 312, the second control circuit 334, the vehicle control circuit 206, or a combination thereof.

When the electric engine detection 908 determines that the ignition factors 226 do not continue to support the determination of the start event 920 as commenced by the voltage dip detection 906, then the control flow can loop back to the battery voltage read 904. When the electric engine detection 908 determines that the ignition factors 226 do support the determination of the start event 920 as commenced by the voltage dip detection 906, then the control flow can continue with the electric engine confirmation 912 with the processing output from the electric engine detection 908 and the previous modules available to the electric engine confirmation 912.

The combust engine detection 910 is configured to continue determine the start event 920 for the combustion engine 211 or the combustion portion 207 of the hybrid engine 205. As described earlier, when the vehicle system 100, the combustion vehicle 224 of FIG. 2, the electric vehicle 202 as a hybrid vehicle, or a combination thereof determines that the first voltage difference 430 is within the non-electrical range 434, then a combustion engine 211 or the combustion portion 207 of the hybrid engine 205 is detected.

The combust engine detection 910 can forgo receiving the on-board diagnostics 222 for ignition factors 226. The ignition factors 226 are optional to continue to determine the start event 920 for the combustion engine 211 or the combustion portion 207 of the hybrid engine 205. The combust engine detection 910 can optionally utilize the ignition factors 226 to continue to determine the start event 920 as similarly described in the electric engine detection 908.

The vehicle system 100, the combustion vehicle 224, the electric vehicle 202 as the hybrid vehicle, or a combination thereof can utilize the revolutions per minute 918 (RPM) to continue to determine the start event 920. The combust engine detection 910 can receive the information for the revolutions per minute 918 with the on-board diagnostics 222. The combust engine detection 910 can affirm the correct detection 916 from the voltage dip detection 906 with the revolutions per minute 918.

The combust engine detection 910 can receive or transmit information or data with one or more communication circuits from the combustion vehicle 224 or the electric vehicle 202 as the hybrid vehicle, such as the first communication circuit 316, the second communication circuit 336, the vehicle communication circuit 204, or a combination thereof. The combust engine detection 910 can store the information or data generated or received in one or more storage circuits, such as the first storage circuit 314, the second storage circuit 346, the vehicle storage circuit 208, or a combination thereof. The combust engine detection 910 can perform the processing with one or more control circuits, such as the first control circuit 312, the second control circuit 334, the vehicle control circuit 206, or a combination thereof.

When the combust engine detection 910 determines that the revolutions per minute 918 does not continue to support the determination of the start event 920 as commenced by the voltage dip detection 906, then the control flow can loop back to the battery voltage read 904. When the combust engine detection 910 determines that the value of the revolutions per minute 918 does continue to support the determination of the start event 920 as commenced by the voltage dip detection 906, then the control flow can continue with operation of the combustion vehicle 224 or the electric vehicle 202 as the hybrid vehicle.

The electric engine confirmation 912 is configured to verify the start event 920 as commenced by the voltage dip detection 906. The electric engine confirmation 912 is also configured to receive the on-board diagnostics 222 of FIG. 2 for the battery 213 of FIG. 2. As described earlier and for example, the first voltage reading 424 of FIG. 8, the second voltage reading 426 of FIG. 8, or a combination thereof can be provided with the on-board diagnostics 222.

The electric engine confirmation 912 operates on the running region 410 of FIG. 8 of the voltage profile 402. The electric engine confirmation 912 operates on the ripples 422 of FIG. 8 of the voltage profile 402. The electric engine confirmation 912 can also operate with the ripples 422 of FIG. 7.

The electric engine confirmation 912 receives the first voltage reading 424, the second voltage reading 426, or a combination thereof from the ripples 422. The electric engine confirmation 912 determines the spikes 702 of FIG. 8 and the valleys 704 of FIG. 8 as described in FIG. 8. The electric engine confirmation 912 can also determine the voltage value for the ripple peak voltage reading 706 and for the ripple minima voltage reading 708 as described in FIG. 8.

As described in FIG. 7 and FIG. 8 in the context of the ripples 422, the electrical range 432 represents when the first voltage difference 430 is less than 1% of the voltage value for the ripple peak voltage reading 706. Similarly in the context of the ripples 422, the non-electrical range 434 represents when the first voltage difference 430 is greater than or equal to 1% and less than 3% of the voltage value for the ripple peak voltage reading 706.

When the electric engine confirmation 912 determines that the first voltage difference 430 falls with the electrical range 432, then the start event 920 is confirmed. The electric vehicle 202 can continue to operate.

When the electric engine confirmation 912 determines that the first voltage difference 430 falls within the non-electrical range 434, then the electric engine confirmation 912 cannot verify the start event 920 based on the electric engine 203 or the electric portion 209 of the hybrid engine 205. In this case, the control flow can continue to the combust engine detection 910 to determine if the hybrid engine 205 is operating the combustion portion 207 during the running region 410.

When the electric engine confirmation 912 determines that the first voltage difference 430 does not fall in the electrical range 432 nor the non-electrical range 434, then the control flow can loop back to the battery voltage read 904.

The electric engine confirmation 912 can receive or transmit information or data with one or more communication circuits, such as the first communication circuit 316, the second communication circuit 336, the vehicle communication circuit 204, or a combination thereof. The electric engine confirmation 912 can store the information or data generated or received in one or more storage circuits, such as the first storage circuit 314, the second storage circuit 346, the vehicle storage circuit 208, or a combination thereof. The electric engine confirmation 912 can perform the processing with one or more control circuits, such as the first control circuit 312, the second control circuit 334, the vehicle control circuit 206, or a combination thereof.

It has been discovered that the vehicle system 100, the electric vehicle 202, or a combination thereof can minimize the complexity to detect the start event 920 by eliminating the need for processing the information for the revolutions per minute 918 (RPM). The correct detection 916 of the dip voltage reading 416 and the first voltage difference 430 falling within the electrical range 432 provides for the determination of the start event 920 for the ignition for the electric engine 203 or for the electric portion 209 of the hybrid engine 205.

It has been further discovered that the vehicle system 100, the electric vehicle 202, or a combination thereof can avoid a missed detection of the start event 920 by avoiding relying on the information for the revolutions per minute 918, which is not provided or exists for the electric engine 203 or the electric portion 209 of the hybrid engine 205.

It has been yet further discovered that the vehicle system 100, the electric vehicle 202, or a combination thereof can improve the reliability of the start event 920 not only by confirming beyond the dip voltage reading 416 falling in the electrical range 432 but also the ripples 422 fall in the electrical range 432.

It has been yet further discovered that the vehicle system 100, the electric vehicle 202, or a combination thereof can avoid a missed detection of the start event 920 for the hybrid engine 205 when combustion portion 207 is operating by determining the ripples 422 fall in the non-electrical range 434 despite the dip voltage reading 416 falling in the electrical range 432.

It has been yet further discovered that the simplified and robust determination of the voltage value for of the dip voltage reading 416 and detection of the start event 920 allows for the vehicle system 100, the electric vehicle 202, or a combination thereof to function correct. As an example, navigation systems can correctly compute mileage range for the electric vehicle or hybrid vehicle. Also as an example, the electric vehicle 202 can prepare the rest of the system within and external thereto for operation.

The modules described in this application can be hardware implementation or hardware accelerators, including passive circuitry, active circuitry, or both, in the first storage circuit 314, the second storage circuit 346, the first control circuit 312, the second control circuit 334, or a combination thereof. The modules can also be hardware implementation or hardware accelerators, including passive circuitry, active circuitry, or both, within the first device 102, the second device 106, or a combination thereof but outside of the first storage circuit 314, the second storage circuit 346, the first control circuit 312, the second control circuit 334, or a combination thereof.

The vehicle system 100 has been described with module functions or order as an example. The vehicle system 100 can partition the modules differently or order the modules differently. For example, the vehicle system 100 can be without the pre-ignition detection 902. Also for example, the pre-ignition detection 902 and the battery voltage read 904 can be combined into one module.

For illustrative purposes, the various modules have been described as being specific to the first device 102, the second device 106, the electric vehicle 202, or the combustion vehicle 224. However, it is understood that the modules can be distributed differently. For example, the various modules can be implemented in a different device, or the functionalities of the modules can be distributed across multiple devices. Also as an example, the various modules can be stored in a non-transitory memory medium.

As a more specific example, one or more modules described above can be stored in the non-transitory memory medium for distribution to a different system, a different device, a different user, or a combination thereof, for manufacturing, or a combination thereof. Also as a more specific example, the modules described above can be implemented or stored using a single hardware unit or circuit, such as a chip or a processor, or across multiple hardware units or circuits.

The modules described in this application can be stored in the non-transitory computer readable medium. The first storage circuit 314, the second storage circuit 346, or a combination thereof can represent the non-transitory computer readable medium. The first storage circuit 314, the second storage circuit 346, the vehicle storage circuit 208, or a combination thereof, or a portion therein can be removable from the first device 102, the second device 106, the electric vehicle 202, the combustion vehicle 224, or a combination thereof. Examples of the non-transitory computer readable medium can be a non-volatile memory card or stick, an external hard disk drive, a tape cassette, or an optical disk.

The physical transformation of the on-board diagnostics 222, the first voltage reading 424, the second voltage reading 426, and the start event 920 representing the real-world environment results in the real-time movement in the physical world, such as physical change in information or environment processed for the user on one or more of the devices or physical displacement of the electric vehicle 202, the combustion vehicle 224, or a combination thereof. Movement in the physical world results in updates to the electric vehicle 202, the combustion vehicle 224, or a combination thereof, which can be fed back into the vehicle system 100 and further influence operation or update the electric vehicle 202, the combustion vehicle 224, or a combination thereof.

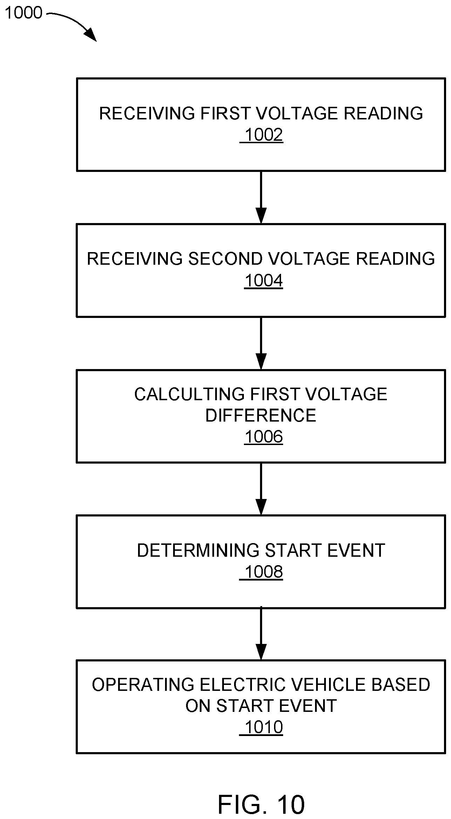

Referring now to FIG. 10, therein is shown a flow chart of a method 1000 of operation of a vehicle system 100 in an embodiment of the present invention. The method 1000 includes: receiving a first voltage reading in a box 1002; receiving a second voltage reading in a box 1004; calculating a first voltage difference between the first voltage reading and the second voltage reading in a box 1006; determining a start event for an electrical engine with the first voltage difference is within an electrical range in a box 1008; and operating the electric vehicle based on the start event in a box 1010.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A method of operation for a vehicle system comprising:
receiving a first voltage reading;
receiving a second voltage reading;
calculating a first voltage difference between the first voltage reading and the second voltage reading;
determining a start event for an electric vehicle with the first voltage difference is within an electrical range; and
operating the electric vehicle based on the start event.

2. The method as claimed in claim 1 wherein determining the start event for the electric vehicle with the first voltage difference is within the electrical range includes polling for an ignition status or receiving for an ignition message.

3. The method as claimed in claim 1 wherein:
receiving the first voltage reading includes receiving a resting voltage reading;
receiving the second voltage reading includes receiving a dip voltage reading; and
determining the start event for the electric vehicle with the first voltage difference is within the electrical range includes calculating the electrical range between the first voltage difference greater than two percent of the resting voltage reading and less than or equal to ten percent of the resting voltage reading.

4. The method as claimed in claim 1 wherein:
receiving the first voltage reading includes receiving a ripple peak voltage reading;
receiving the second voltage reading includes receiving a ripple minima voltage reading; and
determining the start event for the electric vehicle with the first voltage difference is within the electrical range includes calculating the electrical range with the first voltage difference less than one percent of the ripple peak voltage reading.

5. The method as claimed in claim 1 wherein receiving the second voltage reading includes receiving the second voltage reading after a reading time from receiving the first voltage reading.

6. The method as claimed in claim 1 wherein operating the electric vehicle based on the start event includes operating a hybrid engine with the electric vehicle.

7. A vehicle system comprising:
a communication circuit configured to:
receive a first voltage reading,
receive a second voltage reading;
a control circuit, coupled to the communication circuit, configured to:
calculate a first voltage difference between the first voltage reading and the second voltage reading,
determine a start event for an electric vehicle with the first voltage difference is within an electrical range, and
operate the electric vehicle based on the start event.

8. The system as claimed in claim 7 wherein the control circuit is further configured to poll for an ignition status or receive for an ignition message.

9. The system as claimed in claim 7 wherein the control circuit is further configured to receiving for an ignition message.

10. The system as claimed in claim 7 wherein:
the communication circuit is further configured to:
receive the first voltage reading as a resting voltage reading,
receive the second voltage reading as a dip voltage reading;
the control circuit, coupled to the communication circuit, is further configured to:
calculate the electrical range between the first voltage difference greater than two percent of the resting voltage reading and less than or equal to ten percent of the resting voltage reading.

11. The system as claimed in claim 7 wherein:
the communication circuit is further configured to:
receive the first voltage reading as a ripple peak voltage reading,
receive the second voltage reading as a ripple minima voltage reading;
the control circuit, coupled to the communication circuit, is further configured to:
calculate the electrical range with the first voltage difference less than one-tenth percent of the ripple peak voltage reading.

12. A non-transitory computer readable medium including instructions executable by a control circuit for a vehicle system 100 comprising:
receiving a first voltage reading;
receiving a second voltage reading;
calculating a first voltage difference between the first voltage reading and the second voltage reading;
determining a start event for an electric vehicle with the first voltage difference is within an electrical range; and
operating the electric vehicle based on the start event.

13. The non-transitory computer readable medium as claimed in claim 12 further comprising determining the start event for the electric vehicle with the first voltage difference is within the electrical range includes polling for an ignition status or receiving for an ignition message.

14. The non-transitory computer readable medium as claimed in claim 12 further comprising:
receiving the first voltage reading includes receiving a resting voltage reading;
receiving the second voltage reading includes receiving a dip voltage reading; and
determining the start event for the electric vehicle with the first voltage difference is within the electrical range includes calculating the electrical range between the first voltage difference greater than two percent of the resting voltage reading and less than or equal to ten percent of the resting voltage reading.

15. The non-transitory computer readable medium as claimed in claim 12 further comprising:
receiving the first voltage reading includes receiving a ripple peak voltage reading;
receiving the second voltage reading includes receiving a ripple minima voltage reading; and
determining the start event for the electric vehicle with the first voltage difference is within the electrical range includes calculating the electrical range with the first voltage difference less than one-tenth percent of the ripple peak voltage reading.
